(19) Europäisches Patentamt
European Patent Office
Office européen des brevets

(11) EP 3 067 376 A1

(12) EUROPÄISCHE PATENTANMELDUNG

(43) Veröffentlichungstag:
**14.09.2016 Patentblatt 2016/37**

(21) Anmeldenummer: **15158626.0**

(22) Anmeldetag: **11.03.2015**

(51) Int Cl.:
***C08G 18/48*** $^{(2006.01)}$
***C08G 18/76*** $^{(2006.01)}$
***C08G 18/18*** $^{(2006.01)}$
***C08G 18/44*** $^{(2006.01)}$
***C08G 18/10*** $^{(2006.01)}$
***C08G 18/16*** $^{(2006.01)}$
***C08K 5/19*** $^{(2006.01)}$
***C08K 5/20*** $^{(2006.01)}$
***C08K 5/42*** $^{(2006.01)}$
***C08K 5/549*** $^{(2006.01)}$
***C08K 5/3445*** $^{(2006.01)}$
*C08G 101/00* $^{(2006.01)}$

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Evonik Degussa GmbH**
**45128 Essen (DE)**

(72) Erfinder:
- **Krebs, Michael**
**40219 Düsseldorf (DE)**
- **Hubel, Roland**
**45136 Essen (DE)**

# (54) Herstellung von Polyurethansystemen unter Einsatz von Polyetherpolycarbonatpolyolen

(57) Es werden ein Verfahren zur Herstellung von Polyurethansystemen unter Einsatz von Polyetherpolycarbonatpolyolen unter Verwendung von Additiven, umfassend a) ionisches Tensid A, ausgewählt aus solchen der Formel $A^-M^+$, mit $A^-$ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und $M^+$ = Kation, b) ionisches Tensid B, ausgewählt aus einer quaternisierten Ammoniumverbindung, c) tertiäre Aminverbindung C, die eine Molmasse von vorzugsweise mindestens 150 g/mol aufweist, und/oder d) Oxazasilinan D, sowie entsprechend hergestellte Polyurethansysteme, vorzugsweise -schäume und deren Verwendung beschrieben.

EP 3 067 376 A1

## Beschreibung

Die vorliegende Erfindung liegt auf dem Gebiet der Polyurethane. Sie betrifft insbesondere Polyurethansysteme, die unter Einsatz von Polyetherpolycarbonatpolyol erhalten werden und ein Verfahren zur Herstellung solcher Polyurethansysteme.

Polyurethane unterschiedlicher Art werden üblicherweise durch die Polymerisation von Diisocyanaten, wie z. B. 4,4'-Methylenbis(phenylisocyanat), kurz MDI, oder 2,4-Toluylendiisocyanat, kurz TDI, mit Polyether-Polyolen oder Polyester-Polyolen hergestellt. Polyether-Polyole können z.B. durch Alkoxylierung von polyhydroxyfunktionellen Startern gefertigt werden. Geläufige Starter sind z. B. Glykole, Glycerin, Trimethylolpropan, Pentaerythrit, Sorbit oder Saccharose. Bei der Herstellung von Polyurethanschäumen, einem der besonders wichtigen Polyurethansysteme, kommen üblicherweise zusätzliche Treibmittel zum Einsatz, wie z.B. Pentan, Methylenchlorid, Aceton oder Kohlenstoffdioxid. Als chemisches Treibmittel wird meist Wasser eingesetzt, welches unter Abspaltung von Kohlendioxid mit Isocyanat zu einem Polyharnstoff reagiert. Üblicherweise werden zur Stabilisierung des Polyurethanschaums oberflächenaktive Substanzen, insbesondere Silikontenside eingesetzt.

Polyurethanschaumstoffe bzw. -schäume finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme und Matratzen verwendet.

Andere relevante Polyurethansysteme sind z. B. Polyurethanbeschichtungen, Polyurethanadhäsive, Polyurethandichtmittel oder Polyurethanelastomere.

Der Markt verlangt grundsätzlich nach Alternativen zu konventionellen Polyolen für Polyurethansysteme, sei es aus ökologischen oder ökonomischen Gründen.

So werden beispielsweise bei der Herstellung von Polyurethanweichschäumen größtenteils Polyetherpolyole als Polyolkomponente verwendet. Polyetherpolyole können bekanntermaßen mittels Anlagerung von Alkylenoxiden an H-funktionelle Startsubstanzen hergestellt werden. Die dabei am häufigsten verwendeten Alkylenoxide sind Ethylenoxid und Propylenoxid.

Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von $CO_2$ als Comonomer ökologisch sehr vorteilhaft, da diese Reaktion die Umsetzung eines Treibhausgases zu einem Polymer darstellt.

Aus diesem Grunde ist bei der Herstellung von Polyurethansystemen in den vergangenen Jahren der Wunsch in den Fokus gerückt, Polyole, welche Kohlenstoffdioxid als Carbonat gebunden enthalten, insbesondere Polyetherpolycarbonatpolyole einzusetzen.

Allerdings geht der gewünschte Einsatz von solchen Polyolen, insbesondere Polyetherpolycarbonatpolyolen bei der Herstellung von Polyurethansystem noch mit einigen Problemen einher.

Beispielsweise sind die umzusetzenden Komponenten aufgrund von unterschiedlicher Polarität und daraus resultierender Inkompatibilität schlecht mischbar. Außerdem macht die sehr hohe Viskosität der einzusetzenden Polycarbonate deren Verarbeitung schwierig. Die erhaltenen Polyurethanschäume sind technisch nicht zufriedenstellend, da sie im Hinblick auf die Herstellung eine verlängerte Steigzeit (siehe z.B. WO 2013/016331, WO 2008/058913) und geringere Höhe (Gasausbeute) aufweisen und die erhaltenen Schäume veränderte physikalische Eigenschaften, wie zum Beispiel Bruchdehnung, Zugfestigkeit und Härte zeigen.

In der Literatur ist derzeit keine technische Lehre bekannt, wie Polyurethansysteme, vorzugsweise Polyurethanschäume, insbesondere frei gestiegene Polyurethan-Weich(block)schäume unter Verwendung von Polyolen mit einem signifikanten Anteil an im Polyol gebundenen $CO_2$ (d.h. > 1 Gew.-% Gesamtbestandteil $CO_2$ gebunden als Carbonat im Polyol, Gew.-% bezogen auf das gesamte Polyol) ohne Verwendung aufwändiger Techniken oder komplexer Reaktionen in einfacher Weise hergestellt werden können, insbesondere unter Nutzung bestehender Produktionsanlagen, ohne die nachteilige Steigzeitverlängerung, verringerte Gasausbeute und veränderte physikalische Eigenschaften in Kauf zu nehmen.

Die konkrete zu lösende Aufgabe der vorliegenden Erfindung war es vor diesem Hintergrund, einen einfachen Zugang zu solchen Polyurethansystemen, vorzugsweise Polyurethanschäumen, insbesondere frei gestiegenen Polyurethan-Weichblockschäumen, bereitzustellen, die einen Einsatz von Polyolen mit signifikantem Anteil an im Polyol gebundenen $CO_2$ (d.h. > 1 Gew.-% Gesamtbestandteil $CO_2$ gebunden als Carbonat im Polyol, Gew.-% bezogen auf das gesamte Polyol) beinhalten und in Hinblick auf die Herstellung eine Steigzeit aufweisen, welche mit gewöhnlichen Polyether-oder Polyesterpolyol-basierenden Polyurethanschäumen vergleichbar ist.

Überraschenderweise wurde nun gefunden, dass ein Zugang zu solchen Polyurethansystemen, vorzugsweise -schäumen, durch den Einsatz bestimmter Additive ermöglicht wird.

Die zu bewältigende Aufgabe wird durch den Gegenstand der Erfindung gelöst, nämlich einem Verfahren zur Herstellung von Polyurethansystemen, insbesondere -schäumen, durch Umsetzung einer oder mehrerer Polyolkomponenten mit einer oder mehrerer Isocyanatkomponenten, wobei

i) das eingesetzte Polyol insgesamt mindestens 1 Gew.-%, vorzugsweise mindestens 5 Gew.-% Kohlenstoffdioxid, gebunden als Carbonat enthält und
ii) mindestens 10 Gew.-% des eingesetzten Polyols als Polyetherpolycarbonatpolyol vorliegt, Gew.-% jeweils bezogen auf die gesamte eingesetzte Menge Polyol,

in Gegenwart eines Additivs, wobei als Additiv zumindest eine, vorzugsweise zwei, vorteilhafterweise drei und insbesondere alle, der nachfolgenden Verbindungen a) bis d) zur Anwendung gelangen:

a) ionisches Tensid A, ausgewählt aus solchen der Formeln (II)

$$A^-M^+ \qquad (II)$$

mit **$A^-$ =** Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und $M^+$ = Kation, welches kein Ammoniumkation ist, vorzugsweise Metallkation, bevorzugt Alkalimetallkation und besonders bevorzugt Kalium- oder Natriumkation,
b) ionisches Tensid B, ausgewählt aus einer quaternisierten Ammoniumverbindung,
c) eine tertiäre Aminverbindung C, die kein Oxazasilinan ist und eine Molmasse von vorzugsweise mindestens 150 g/mol, besonders bevorzugt mindestens 200 g/mol aufweist, und die vorzugsweise in einer Konzentration von 0,5 Massen-% in Wasser die statische Oberflächenspannung dieser Lösung auf kleiner 40 N/m herabsetzt,
d) Oxazasilinan D.

Der Begriff des "eingesetzten Polyols" umfasst die Gesamtheit des im erfindungsgemäßen Verfahren eingesetzten Polyols, umfasst also alle eingesetzten Polyolkomponenten, umfasst also insbesondere auch Polyolmischungen.

Der Begriff "Additiv" umfasst im Sinne dieser Erfindung insbesondere eine Additivzusammensetzung, die jede der vorgenannten Verbindungen a) bis d), mehrere dieser Verbindungen a) bis d) oder sämtliche Verbindungen a) bis d) enthalten kann, wobei diese Additivzusammensetzung ferner noch weitere Komponenten enthalten kann, wie insbesondere Lösungsmittel.

Das erfindungsgemäß einzusetzende Additiv kann grundsätzlich folgende der zuvor genannten Verbindungen a) bis d) umfassen:

a; b; c; d; d.h. also jeweils nur eine der Verbindungen a) bis d), wie z.B. a, also ionisches Tensid A;
a,b; a,c; a,d; b,c; b,d; c,d; d.h. also jeweils zwei Verbindungen a) bis d), wie z.B. a,b, also ionisches Tensid A und ionisches Tensid B;
a,b,c; a,b,d, b,c,d, a,c,d; d.h. also jeweils drei Verbindungen a) bis d), wie z.B. a,b,c, also ionisches Tensid A und ionisches Tensid B sowie tertiäre Aminverbindung C;
a,b,c,d, d.h. also alle Verbindungen a) bis d), also ionisches Tensid A und ionisches Tensid B sowie tertiäre Aminverbindung C und Oxazasilinan D.

Durch den erfindungsgemäßen Additiveinsatz, insbesondere der zuvor genannten Additivzusammensetzung, können mit Hilfe des erfindungsgemäßen Verfahrens Polyurethansysteme, vorzugsweise Polyurethanschaumstoffe wie insbesondere Polyurethanweichschaumstoffe sowie insbesondere auch frei gestiegene Polyurethanschäume unter Verwendung von Polyolen, die einen signifikanten Anteil an im Polyol gebundenen $CO_2$ (d.h. > 1 % Gesamtbestandteil $CO_2$, vorzugsweise > 5 % Gesamtbestandteil $CO_2$ gebunden als Carbonat im Polyol, Gew.-% bezogen auf das gesamte Polyol) aufweisen und Polyetherpolycarbonatpolyole enthalten, überraschend einfach hergestellt werden, wobei bei der Schaumherstellung Schäume mit guter, stabiler und homogener Schaumstruktur resultieren. Dabei kann auf die gewohnten Produktionsanlagen zurückgegriffen werden.

Sowohl die Steigzeit bei der Produktion des Schaumes, die Steighöhe als auch die Zellfeinheit des resultierenden Schaumes liegen bei dem erfindungsgemäßen Verfahren in einem Bereich, der für die Produktion industrieller Polyurethan-Weichschäume auf Basis von Polyether-Polyol typisch ist. Weiterhin weisen die PUR-Schäume bei dem erfindungsgemäßen Verfahren in Bezug auf physikalische Eigenschaften wie Zugfestigkeit oder Bruchdehnung verbesserte Werte im Gegensatz zu solchen Schäumen auf, die zwar unter Verwendung von Polyetherpolycarbonatpolyolen aber ohne Einsatz des erfindungsgemäßen Additivs hergestellt wurden. Bei dem erfindungsgemäßen Verfahren kann insbesondere auf die kommerziell verfügbaren Polyetherpolycarbonatpolyole zurückgegriffen werden.

Das erfindungsgemäße Verfahren hat außerdem den Vorteil, dass die erfindungsgemäß einzusetzenden Additive, insbesondere Additivzusammensetzungen, auch in Kombination mit herkömmlichen Stabilisatoren eingesetzt werden können.

Das erfindungsgemäße Verfahren zur Herstellung von Polyurethansystemen erfolgt üblicherweise in Gegenwart eines oder mehrerer Katalysatoren, die die Reaktionen Isocyanat-Polyol und/oder Isocyanat-Wasser und/oder die Isocyanat-Trimerisierung katalysieren.

Das erfindungsgemäße Verfahren, die erfindungsgemäß einzusetzenden Additive oder Additivzusammensetzungen sowie deren Verwendung werden nachfolgend anhand von vorteilhaften Ausführungsformen genauer beschrieben. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Wenn nicht anders angegeben wurde die Molmasse der eingesetzten Verbindungen durch Gel-Permeations-Chromatographie (GPC) und die Bestimmung der Struktur der eingesetzten Verbindungen durch NMR-Methoden, insbesondere durch $^{13}C$- und $^{29}Si$-NMR bestimmt. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Sind nachfolgend Messwerte angegeben, so sind diese Messungen, wenn nicht anders angegeben bei Normalbedingungen (25 °C und 1013 mbar) durchgeführt worden.

Es entspricht einer ganz besonders bevorzugten Ausführungsform dieser Erfindung, wenn die erfindungsgemäß einzusetzende Additivzusammensetzung 0 bis 90 Gew.-%, vorzugsweise 10 bis 80 Gew.-%, besonders bevorzugt 20 bis 70 Gew.-%, bezogen auf die gesamte Additivzusammensetzung, eines oder mehrerer anorganischer oder organischer Lösungsmittel, vorzugsweise ausgewählt aus Wasser, Alkoholen, insbesondere Polyethermonoolen oder -polyolen, vorzugsweise bestehend aus H-funktionellen Startersubstanzen, an welche mittels Alkoxylierung Alkylenoxide (Epoxide) mit 2-24 Kohlenstoffatomen, vorzugsweise Ethylenoxid und/oder Propylenoxid, angelagert wurden und die ein Molekulargewicht von vorzugsweise 200 - 8000 g/mol, bevorzugt von 300 - 5000 g/mol, besonders bevorzugt von 500 - 1000 g/mol, und einen PO-Gehalt von vorzugsweise 10 - 100 Gew.%, bevorzugt von 50 - 100 Gew.% aufweisen sowie Polyestermonolen oder -polyolen mit einem Molekulargewicht vorzugsweise im Bereich von 200 bis 4500 g/mol, Glykolen, Alkoxylaten, Carbonaten, Ether, Ester, verzweigten oder linearen aliphatischen oder aromatischen Kohlenwasserstoffen und/oder Ölen synthetischer und/oder natürlicher Herkunft, enthält.

Als Polyurethansysteme im Sinne dieser Erfindung kommen insbesondere Polyurethanbeschichtungen, Polyurethanadhäsive, Polyurethandichtmittel, Polyurethanelastomere oder Polyurethanschäume/-schaumstoffe in Betracht, wobei Polyurethanschäume, insbesondere frei gestiegene Polyurethan-Weichblockschäume am meisten bevorzugt sind.

Insbesondere ist es bevorzugt, dass in dem erfindungsgemäßen Verfahren als Additiv eine Additivzusammensetzung enthaltend

a) mindestens ein ionisches Tensid A, ausgewählt aus solchen der Formeln (II)

$$A^-M^+ \qquad (II)$$

mit $A^-$ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und $M^+$ = Kation, welches kein Ammoniumkation ist, vorzugsweise Metallkation, bevorzugt Alkalimetallkation und besonders bevorzugt Kalium- oder Natriumkation,

und/oder

b) mindestens ein ionisches Tensid B, ausgewählt aus einer quaternisierten Ammoniumverbindung,

sowie weiterhin

c) mindestens eine tertiäre Aminverbindung C, die kein Oxazasilinan ist und eine Molmasse von vorzugsweise mindestens 150 g/mol, besonders bevorzugt mindestens 200 g/mol aufweist, und die vorzugsweise in einer Konzentration von 0,5 Massen-% in Wasser die statische Oberflächenspannung dieser Lösung auf kleiner 40 N/m herabsetzt,

und/oder, vorzugsweise und

d) mindestens ein Oxazasilinan D,

eingesetzt wird,
wobei die erfindungsgemäß einzusetzende Additivzusammensetzung vorteilhafterweise Lösungsmittel enthält, und zwar vorzugsweise 10 bis 80 Gew.-%, besonders bevorzugt 20 bis 70 Gew.-% eines oder mehrerer anorganischer oder organischer Lösungsmittel, vorzugsweise ausgewählt aus Wasser, Alkoholen, insbesondere Polyethermonoolen oder -polyolen, vorzugsweise bestehend aus H-funktionellen Startersubstanzen, an welche mittels Alkoxylierung Alkylenoxide (Epoxide) mit 2-24 Kohlenstoffatomen, vorzugsweise Ethylenoxid und/oder Propylenoxid, angelagert wurden und die ein Molekulargewicht von vorzugsweise 200 - 8000 g/mol, bevorzugt von 300 - 5000 g/mol, besonders bevorzugt von 500 - 1000 g/mol, und einen PO-Gehalt von vorzugsweise 10 - 100 Gew.%, bevorzugt von 50 - 100 Gew.% aufweisen sowie Polyestermonolen oder -polyolen mit einem Molekulargewicht vorzugsweise im Bereich von 200 bis 4500 g/mol, Glykolen, Alkoxylaten, Carbonaten, Ether, Ester, verzweigten oder linearen aliphatischen oder aromatischen Kohlenwasserstoffen und/oder Ölen synthetischer und/oder natürlicher Herkunft.

Entsprechend ist jeweils jede einzelne der nachfolgend genannten Additivzusammensetzungen bevorzugt erfindungsgemäß einsetzbar, enthaltend die Komponenten:

a, c sowie Lösungsmittel; a, d sowie Lösungsmittel; b, c sowie Lösungsmittel; b, d sowie Lösungsmittel; a, c, d sowie Lösungsmittel; a, b, d sowie Lösungsmittel; a, b, c sowie Lösungsmittel; b, c, d sowie Lösungsmittel; a, b, c, d sowie Lösungsmittel.

In dem erfindungsgemäßen Verfahren werden vorteilhafterweise Polyetherpolycarbonatpolyole eingesetzt. Polyetherpolycarbonatpolyole sind dem Fachmann an sich bekannt, sie sind in der Fach- wie in der Patentliteratur breit beschrieben und sie sind auch kommerziell breit verfügbar. Sie besitzen vorzugsweise eine Struktur, die sich mit der allgemeinen Formel (Ia) beschreiben lässt.

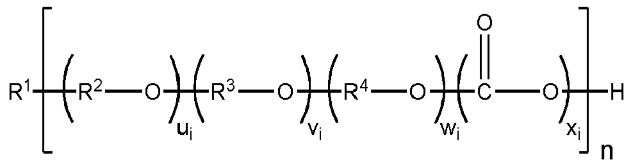 (Ia)

$R^1$ Startersubstanzrest ohne für die Alkoxylierung aktiven H-Atome, wie beispielsweise Molekülreste von ein- oder mehrwertigen Alkoholen, ein- oder mehrwertigen Aminen, mehrwertigen Thiolen, Carbonsäuren, Aminoalkoholen, Aminocarbonsäuren, Thioalkoholen, Hydroxyestern, Polyetherpolyolen, Polyesterpolyolen, Polyesteretherpolyolen, Polyethercarbonatpolyolen, Polyethyleniminen, Polyetheraminen (z. B. sogenannte Jeffamine® von Huntsman, wie z. B. D-230, D- 400, D-2000, T-403, T-3000, T-5000 oder entsprechende Produkte der BASF, wie z . B . Polyetheramin D230, D400, D200, T403, T5000), Polytetrahydrofuranen (z. B. PolyTHF® der BASF, wie z. B. PolyTHF® 250, 650S, 1000, 1000S, 1400, 1800, 2000), Polytetrahydrofuranaminen, Polyetherthiolen, Polyacrylatpolyolen, Ricinusöl, von Mono- oder Triglyceriden der Ricinolsäure, Monoglyceriden von Fettsäuren, chemisch modifizierten Mono-, Di- und/oder Triglyceriden von Fettsäuren, und C1-C24 Alkyl-Fettsäureestern, die im Mittel mindestens 2 OH-Gruppen pro Molekül enthalten.

$R^2$ $CH_2$-$CH_2$,

$R^3$ $CH_2$-$CH(CH_3)$,

$R^4$ $CH_2$-$CH(R^5)$, $CH(R^6)$-$CH(R^6)$, $CH_2$-$C(R^6)_2$, $C(R^6)_2$-$C(R^6)_2$,

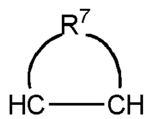 ,

$CH_2$-CH-$CH_2$-$R^8$, $C_6H_6$-CH-$CH_2$, $C_6H_6$-$C(CH_3)$-$CH_2$,
Molekülrest von ein- oder mehrfach epoxidierten Fetten oder Ölen als Mono-, Di-, und Triglyceride oder Molekülrest von ein- oder mehrfach epoxidierten Fettsäuren oder deren $C_1$-$C_{24}$-Alkylestern

$R^5$ $C_2$ bis $C_{24}$-Alkylrest oder Alkenrest, der linear oder verzweigt sein kann

$R^6$ $C_2$ bis $C_{24}$-Alkylrest oder Alkenrest, der linear oder verzweigt sein kann

$R^7$ $C_3$ bis $C_6$ Alkylrest, der linear angeordnet ist

$R^8$ OH, Cl, $OCH_3$, $OCH_2$-$CH_3$, O-$CH_2$-CH=$CH_2$oder O-CH=$CH_2$

Des Weiteren gilt

$u_i$, $v_i$, $w_i$ ganze Zahlen von 0 - 400; mit mindestens einem der Indizes $u_i$, $v_i$ oder $w_i \geq 1$;

$x_i$ ganze Zahl von 1 bis 100; wobei zusätzlich gilt, dass in der allgemeinen Formel (Ia) für Polyetherpolycarbonatpolyole weder eine -C(=O)-O-C(=O)-O-Bindung (Carbonat-Carbonat-Bindung) noch eine -C(=O)-OH-Bindung am Kettenende auftritt.

n ganze Zahl von 1 bis 100, bevorzugt von 2 bis 8, insbesondere 2 bis 4.

i ganze Zahl mit i = 1 bis n

Weiterhin gelten für die allgemeine Formel (Ia) vorzugsweise die folgenden Beziehungen

$$\frac{1}{n} \times \sum_{i=1}^{n} \frac{x_i}{u_i + v_i + w_i + x_i} = 0{,}01 \text{ bis } 0{,}5$$

$$\frac{1}{n} \times \sum_{i=1}^{n} \frac{u_i}{u_i + v_i + w_i + x_i} = 0 \text{ bis } 0{,}7$$

$$\frac{1}{n} \times \sum_{i=1}^{n} \frac{v_i}{u_i + v_i + w_i + x_i} = 0 \text{ bis } 0{,}99$$

$$\frac{1}{n} \times \sum_{i=1}^{n} \frac{w_i}{u_i + v_i + w_i + x_i} = 0 \text{ bis } 0{,}7$$

Die Reihenfolge der Monomerbausteine in den einzelnen Polymerketten 1 bis n ist beliebig, wobei jedoch weder -C(=O)-O-C(=O)-O-Bindungen (Carbonat-Carbonat-Bindung) innerhalb der Polymerketten, noch -C(=O)-OH-Bindungen am Kettenende einzelner Polymerketten auftreten. Zusätzlich gilt, dass die n-Polymerketten des Polyetherpolycarbonatpolyols voneinander unabhängig zusammengesetzt sein können. Weiterhin kann gelten, dass während der Anlagerung nicht alle oder nur eine der n-Polymerketten mittels Alkoxylierung wächst.

Werden Gemische von Startersubstanzen eingesetzt, so können unterschiedliche Strukturen von Polyetherpolycarbonatpolyolen der allgemeinen Formel (Ia) nebeneinander vorliegen.

Gilt in der Formel (Ia) $u_i$, $v_i$, $w_i$, $\neq 0$, oder $u_i$, $v_i \neq 0$ und gleichzeitig $w_i = 0$, so können die einzelnen Bausteine ($R^2$-O), ($R^3$-O) und ($R^4$-O) oder ($R^2$-O) und ($R^3$-O) unabhängig von (C(=O)-O)-Einheiten entweder in Form von Blöcken, streng alternierend oder in Form von Gradienten aneinander gebunden sein.

Bevorzugt sind Polyethercarbonatpolyole, aufgebaut aus Startersubstanzen, Ethylenoxid, Propylenoxid und $CO_2$. Diese lassen sich durch die allgemeine Formel (Ib) beschreiben

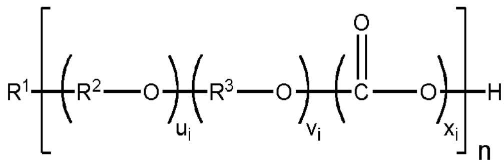 (Ib)

wobei $R^1$, $R^2$ und $R^3$ dieselbe Bedeutung haben wie in Formel (Ia).

Des Weiteren gilt

$u_i$, $v_i$, ganze Zahlen von 0 - 400; mit mindestens $u_i$, oder $v_i \geq 1$;

$x_i$ ganze Zahl von 1 bis 100; wobei zusätzlich gilt, dass in der allgemeinen Formel (Ib) für Polyetherpolycarbonatpolyole weder eine -C(=O)-O-C(=O)-O-Bindung (Carbonat-Carbonat-Bindung) noch eine -C(=O)-OH-Bindung am Kettenende auftritt.

n ganze Zahl von 1 bis 100, bevorzugt von 2 bis 8, insbesondere 2 bis 4.

i ganze Zahl mit i = 1 bis n

Weiterhin gelten für die allgemeine Formel (Ib) vorzugsweise die folgenden Beziehungen

$$\frac{1}{n} \times \sum_{i=1}^{n} \frac{x_i}{u_i + v_i + x_i} = 0{,}01 \text{ bis } 0{,}5$$

$$\frac{1}{n} \times \sum_{i=1}^{n} \frac{u_i}{u_i + v_i + x_i} = 0 \text{ bis } 0{,}7$$

$$\frac{1}{n} \times \sum_{i=1}^{n} \frac{v_i}{u_i + v_i + x_i} = 0 \text{ bis } 0{,}99$$

Die Reihenfolge der Monomerbausteine in den einzelnen Polymerketten 1 bis n ist beliebig, wobei jedoch weder -C(=O)-O-C(=O)-O-Bindungen (Carbonat-Carbonat-Bindung) innerhalb der Polymerketten, noch -C(=O)-OH-Bindungen am Kettenende einzelner Polymerketten auftreten. Zusätzlich gilt, dass die n-Polymerketten des Polyetherpolycarbonatpolyols voneinander unabhängig zusammengesetzt sein können. Weiterhin kann gelten, dass während der Anlagerung nicht alle oder nur eine der n-Polymerketten mittels Alkoxylierung wächst.

Werden Gemische von Startersubstanzen eingesetzt, so können unterschiedliche Strukturen von Polyetherpolycarbonatpolyolen der allgemeinen Formel (Ib) nebeneinander vorliegen.

Gilt in der Formel (Ib) $u_i$, $v_i \neq 0$ so können die einzelnen Bausteine ($R^2$-O) und ($R^3$-O) unabhängig von (C(=O)-O)-Einheiten entweder in Form von Blöcken, streng alternierend oder in Form von Gradienten aneinander gebunden sein.

Besonders bevorzugt sind Polyethercarbonatpolyole, aufgebaut aus Startersubstanzen, Propylenoxid und $CO_2$. Diese lassen sich durch die allgemeine Formel (Ic) beschreiben

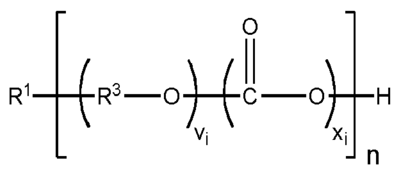 (Ic)

$R^1$ und $R^3$ haben die gleiche Bedeutung wie in Formel (Ia).

Des Weiteren gilt

$v_i$, ganze Zahlen von 4 - 400; mit mindestens $u_i$, oder $v_i \geq 1$;

$x_i$ ganze Zahl von 1 bis 100; wobei zusätzlich gilt, dass in der allgemeinen Formel (Ic) für Polyetherpolycarbonatpolyole weder eine -C(=O)-O-C(=O)-O-Bindung (Carbonat-Carbonat-Bindung) noch eine -C(=O)-OH-Bindung am Kettenende auftritt,

n ganze Zahl von 1 bis 100, bevorzugt von 2 bis 8, insbesondere 2 bis 4,

i ganze Zahl mit i = 1 bis n.

Weiterhin gelten für die allgemeine Formel (Ic) vorzugsweise die folgenden Beziehungen

$$\frac{1}{n} \times \sum_{i=1}^{n} \frac{x_i}{v_i + x_i} = 0{,}01 \text{ bis } 0{,}5$$

$$\frac{1}{n} \times \sum_{i=1}^{n} \frac{v_i}{v_i + x_i} = 0{,}5 \text{ bis } 0{,}99$$

Die Reihenfolge der Monomerbausteine in den einzelnen Polymerketten 1 bis n ist beliebig, wobei jedoch weder -C(=O)-O-C(=O)-O-Bindungen (Carbonat-Carbonat-Bindung) innerhalb der Polymerketten, noch -C(=O)-OH-Bindungen am Kettenende einzelner Polymerketten auftreten. Zusätzlich gilt, dass die n-Polymerketten des Polyetherpolycarbonatpolyols voneinander unabhängig zusammengesetzt sein können. Weiterhin kann gelten, dass während der Anlagerung nicht alle oder nur eine der n-Polymerketten mittels Alkoxylierung wächst.

Werden Gemische von Startersubstanzen eingesetzt, so können unterschiedliche Strukturen von Polyetherpolycarbonatpolyolen der allgemeinen Formel (Ic) nebeneinander vorliegen.

Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie beispielsweise in US-A 3900424 oder US-A 3953383 beschrieben sind. Des Weiteren sind mono- und binukleare Metallkomplexe zur Copolymerisation von $CO_2$ und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Auf diese Weise erhältliche Polyetherpolycarbonatpolyole sind im Sinne dieser Erfindung bevorzugt einsetzbar.

Allgemein können zur Herstellung der Polyetherpolycarbonatpolyole z.B. Alkylenoxide (Epoxide) mit vorzugsweise 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid. 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropylmethyldimethoxysilan, 3-Glycidyloxypropylethyldiethoxysilan, 3-Glycidyloxypropyltrlisopropoxysilan. Vorzugsweise können als Alkylenoxide Ethylenoxid und/oder Propylenoxid, insbesondere Propylenoxid eingesetzt werden.

Als geeignete H-funktionelle Startersubstanz können insbesondere Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH-(sekundäre Amine), -SH und $-CO_2H$, bevorzugt sind -OH und $-NH_2$, besonders bevor-

zugt ist -OH. Als H-funktionelle Startersubstanz wird beispielsweise eine oder mehrere Verbindungen ausgewählt aus der Gruppe bestehend aus Wasser, ein- oder mehrwertige Alkohole, ein- oder mehrwertige Amine, mehrwertige Thiole, Carbonsäuren, Aminoalkohole, Aminocarbonsäuren, Thioalkohole, Hydroxyester, Polyetherpolyole, Polyesterpolyole, Polyesteretherpolyole, Polyetherpolycarbonatpolyole, Polyethylenimine, Polyetheramine (z. B. sogenannte Jeffamine® von Huntsman, wie z. B. D-230, D- 400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine, Polyetherthiole, Polyacrylatpolyole, Ricinusöl, das Mono- oder Triglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkylfettsäureester, die im Mittel mindestens 2 OH-Gruppen pro Molekül enthalten, um Handelsprodukte wie Lupranol Balance® (Fa. BASF SE), Merginol®-Typen (Fa. Hobum Oleochemicals GmbH), Sovermo-Typen (Fa. Cognis Deutschland GmbH & Co. KG) und Soyol®TM-Typen (Fa. USSC Co.). Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin. Morpholin. Als monofunktionelle Thiole können verwendet werden: Ethanthiol, 1-Propanthiol, 2-Propanthiol, 1-Butanthiol, 3-Methyl-1-butanthiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielweise Ethylenglykol, Diethylenglykol, Propylenglykol, Dipropylenglykol, 1,3-Propandiol, 1,4-Butandiol. 1,4-Butendiol. 1,4-Butindiol, Neopentylglykol, 1,5-Pentantandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1 1 10, Bayfill® VPPU 0789, Baygal® K55, PET® 1004, Polyether® S 180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE. Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol. 1,5-Pentandiol, Neopentylglykol, 1,6-Hexandiol, 1,4-Bis(hydroxymethyl)cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyetherpolycarbonatpolyole dienen können. Bevorzugt werden Polyetherpolyole mit Mn = 150 bis 2000 g/mol zur Herstellung der Polyesteretherpolyole eingesetzt.

Des Weiteren können als H-funktionelle Startersubstanzen beispielsweise Polycarbonatdiole eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen®-Typen der Bayer MaterialScience AG verwendet werden, wie z. B. Desmophen® C 1100 oder Desmophen® C 2200. In einer weiteren Ausführungsform der Erfindung können Polyetherpolycarbonatpolyole als 1-funktionelle Startersubstanzen eingesetzt werden. Diese als 1-funktionelle Startersubstanzen eingesetzten Polyetherpolycarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H -Atome pro Molekül) von 1 bis 8, bevorzugt von 2 oder 3 auf. Die H-funktionelle Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel $HO-(CH_2)_x-OH$, wobei x eine Zahl von 1 bis 20, bevorzugt eine gerade Zahl von 2 bis 20 ist. Beispiele für Alkohole gemäß dieser Formel sind Ethylenglycol, 1,4-Butandiol, 1,6-Hexandiol, 1,8-Octandiol, 1,10-Decandiol und 1,12-Dodecandiol.

Weitere bevorzugte H-funktionelle Startersubstanzen sind beispielsweise Neopentylglykol, Trimethylolpropan, Glycerin, Pentaerythrit, Umsetzungsprodukte der Alkohole gemäß der eben genannten Formel $HO-(CH_2)_x-OH$ mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionelle Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 4 und insbesondere ein Molekulargewicht Mn im Bereich von 62 bis 3000 g/mol und eine Funktionalität von 2 bis 3.

Doppelmetallcyanid (DMC)-Katalysatoren sind im Prinzip aus dem Stand der Technik bekannt (vgl. z.B. US-A 3404109, US-A 3829505, US-A 3 941 849 und US-A 5158922). DMC-Katalysatoren, wie z.B. in US-A 5470813, EP-A 700949, EP-A 743093, EP-A 761708, WO 97/40086, WO 98/16310 und WO 00/47649, besitzen eine sehr hohe Aktivität und ermöglichen die Herstellung von Polyetherpolycarbonatpolyolen bei sehr geringen Katalysatorkonzentrationen. Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht grösser als 500 g/mol enthalten.

Insbesondere kann bezüglich der im Rahmen dieser Erfindung einsetzbaren Polyetherpolycarbonatpolyole auf die entsprechende Patentliteratur verwiesen werden, wobei hier insbesondere auf WO 2008/092767 A1 (BASF), WO 2012/049162A1 (Bayer MaterialScience), WO 2010/028362 A1 (Novomer), WO 2010/013948 A2 (Sk Energy Co) verwiesen wird, auf deren Inhalt hiermit vollumfänglich Bezug genommen wird. Polyetherpolycarbonatpolyole, die nach der Lehre dieser Schriften erhältlich sind, sind im Sinne dieser Erfindung bevorzugt einsetzbar.

Die erfindungsgemäß bevorzugt einsetzbaren Polyetherpolycarbonatpolyole können im allgemeinen eine Funktionalität von mindestens 1, bevorzugt von 2 bis 8, besonders bevorzugt von 2 bis 6 und ganz besonders bevorzugt von 2 bis 4 aufweisen.

Gemäß einer bevorzugten Ausführungsform der Erfindung wird in dem erfindungsgemäßen Verfahren solches Polyol eingesetzt, so dass mindestens 20 Gew.-%, in weiter vorteilhafter Weise mindestens 30 Gew.-%, vorzugsweise mindestens 50 Gew.-%, insbesondere mindestens 75 Gew.-% des eingesetzten Polyols als Polyetherpolycarbonatpolyol vorliegt, Gew.-% jeweils bezogen auf die gesamte eingesetzte Menge Polyol.

Gemäß einer weiteren bevorzugten Ausführungsform der Erfindung weist das Polyol insgesamt einen Gehalt an Carbonatgruppen (berechnet als $CO_2$) von mindesten 1 Gew.-%, vorzugsweise von mindestens 5 Gew.-%, besonders bevorzugt von mindestens 10 Gew.-% und ganz besonders bevorzugt von 15 bis 50 Gew.-% auf.

Wenn das erfindungsgemäß eingesetzte Polyetherpolycarbonatpolyol vorzugsweise ein zahlenmittleres Molekulargewicht von 500 bis 20000, vorzugsweise 500 bis 5000, besonders bevorzugt 750 bis 4000 und ganz besonders bevorzugt 1000 bis 3500 aufweist, so liegt eine weitere bevorzugte Ausführungsform der Erfindung vor. Die zuvor angeführten zahlenmittleren Molekulargewichte sind in Anlehnung an DIN 55672-1:2007-8 durch Gel-Permeations-Chromatographie (GPC) bestimmte zahlenmittlere Molekulargewichte, wobei die Kalibrierung gegen einen Polypropylenglycolstandard (76-6000 g/mol) erfolgte.

Vorzugsweise enthalten die erfindungsgemäß einzusetzenden Polyetherpolycarbonatpolyole 1-50 Gew.-%,

vorteilhafterweise 2-43 Gew.-%, besonders bevorzugt 5-20 Gew.-% Kohlendioxid in Form von Carbonateinheiten, 0-60 Gew.-%, vorzugsweise 1-50 Gew.-% Ethylenoxid und 0-99 Gew.-%, vorzugsweise 1-98 Gew.-% Propylenoxid, Gew.-% bezogen auf den durch die Addition von Kohlendioxid aufgebauten Molekülteil des Polyetherpolycarbonatpolyols ohne die Startersubstanz.

Als Alkylenoxid kann demnach z.B. ausschließlich Propylenoxid oder z.B. auch ausschließlich Ethylenoxid eingesetzt werden. Als Alkylenoxid können demnach sowohl Propylenoxid als auch Ethylenoxid eingesetzt werden. Ganz besonders bevorzugt wird als Alkylenoxid ausschließlich Propylenoxid verwendet. Die erfindungsgemäß einzusetzenden Polyetherpolycarbonatpolyole enthalten dann ganz besonders bevorzugt 2-43 Gew.-% Kohlendioxid in Form von Carbonateinheiten und 57-98 Gew.-% Propylenoxid, bezogen auf den durch die Reaktion aufgebauten Molekülteil des jeweiligen Polyetherpolycarbonatpolyols ohne die Startersubstanz.

Das erfindungsgemäß eingesetzte Polyetherpolycarbonatpolyol kann auch als Präpolymer vorliegen. Unter Präpolymeren im Sinne dieser Erfindung werden isocyanat-modifizierte Polyolzusammensetzungen verstanden. Das isocyanat-modifizierte Polyol kann beispielsweise durch Reaktion von mindestens einer Polyolkomponente mit mindestens einem multifunktionalen Isocyanat bevorzugt unter Zuhilfenahme eines Katalysators dargestellt werden, wobei die Menge an Isocyanat zwischen 0,01% (bevorzugt 0,05%, besonders bevorzugt 0,1%) und 15%, bevorzugt 10%, besonders bevorzugt 5% der theoretisch benötigten Menge an Isocyanat zur Reaktion mit allen verfügbaren OH-Gruppen des Polyols liegt und mindestens ein Polyol zur Darstellung des isocyanatmodifizierten Polyols ein Polyetherpolycarbonatpolyol darstellt. Das isocyanat-modifizierte Polyol stellt somit ein lagerstabiles, vorzugsweise nicht separierendes, flüssiges, nicht verschäumtes Polyolpolymer mit endständigen OH-Gruppen dar. So soll eine gute Mischbarkeit der eingesetzten Komponenten gewährleistet werden.

Gemäß einer bevorzugten Ausführungsform enthält die erfindungsgemäß einzusetzende Additivzusammensetzung mindestens ein ionisches Tensid B, ausgewählt aus einer quaternisierten Ammoniumverbindung, sowie mindestens ein Oxazasilinan D. Der Einsatz dieser beiden Komponenten zusammen ergibt einen synergistischen Effekt.

Gemäß einer bevorzugten Ausführungsform enthält die erfindungsgemäß einzusetzende Additivzusammensetzung mindestens ein ionisches Tensid B, ausgewählt aus einer quaternisierten Ammoniumverbindung, sowie mindestens eine tertiäre Aminverbindung C, die kein Oxazasilinan ist und eine Molmasse von vorzugsweise mindestens 150 g/mol, besonders bevorzugt von mindestens 200 g/mol, aufweist und die vorzugsweise in einer Konzentration von 0,5 Massen-% in Wasser die statische Oberflächenspannung dieser Lösung auf kleiner 40 N/m herabsetzt.

Gemäß einer weiteren bevorzugten Ausführungsform enthält die erfindungsgemäß einzusetzende Additivzusammensetzung mindestens ein ionisches Tensid B, ausgewählt aus einer quaternisierten Ammoniumverbindung, sowie mindestens eine tertiäre Aminverbindung C, die kein Oxazasilinan ist und eine Molmasse von vorzugsweise mindestens 150 g/mol, besonders bevorzugt von mindestens 200 g/mol aufweist und die vorzugsweise in einer Konzentration von 0,5 Massen-% in Wasser die statische Oberflächenspannung dieser Lösung auf kleiner 40 N/m herabsetzt, sowie mindestens ein Oxazasilinan D.

Die oben genannte statische Oberflächenspannung wurde nach DIN EN 14370 (Bestimmung von Oberflächenspannungen) bestimmt. Hierzu wurden die Proben in bidestilliertem Wasser gelöst vermessen. Lösungen wurden auf 100 ml berechnet, und auf der Analysenwaage eingewogen. Bildete sich Schaum auf der Probe, wurde dieser mit der Pipette abgesaugt. Für die Messungen wurde ein K100MK2 Tensiometer der Firma Krüss verwendet sowie eine Krüss Standard Platte (Pt, 19,900 x 0,200 x 10,000 mm) für die Plattenmethode bzw. ein Krüss Standard Ring (du Noüy) (Pt, r=9,545 mm, Dicke 0,370 mm) für die Ringmethode. Für die Kalibrierung wurde bidestilliertes Wasser Typ I (Widerstandswert 18,2 MΩcm, TOC-Gehalt < 5 ppb) aus Millipore Simplicity UV der Fa. Millipore und 1-Octanol ≥ 99% der Fa. Sigma-Aldrich verwendet.

Vorzugsweise ist das Tensid B ausgewählt aus einer Imidazolium-Verbindung, einer Pyridiniumverbindung oder einer Verbindung der Formel (IIIa) bis (IIIc)

$$NR^9{}_xR^{10}{}_{4-x}{}^+ X^- \qquad \text{(IIIa)}$$

$$R^{1'}R^{2'}R^{3'}R^{4'}N^+X^- \qquad \text{(IIIb)}$$

$$R^{1'}R^{2'}N^+{=}CR^{3'}R^{4'}X^- \qquad \text{(IIIc)}$$

mit x = 0 bis 4, vorzugsweise 1 bis 3, bevorzugt 2 oder 3, X- = Anion, $R^9$ = gleiche oder verschiedene, vorzugsweise gleiche Alkylreste mit 1 bis 3 Kohlenstoffatomen, vorzugsweise zwei Kohlenstoffatomen und bevorzugt einem Kohlenstoffatom,

$R^{10}$ = gleiche oder verschiedene gegebenenfalls Doppelbindungen enthaltende Kohlenwasserstoffreste mit 5 bis 30, vorzugsweise 8 bis 20 Kohlenstoffatomen, Arylreste, Alkylarylreste oder alkoxylierte Kohlenwasserstoffreste, Polyetherreste der Formel (VI)

$$-(CH_2)_y-O-(C_2H_4O)_o-(C_3H_6O)_p-OH \qquad (VI)$$

mit o und p unabhängig voneinander 0 bis 100, vorzugsweise 0 bis 50, wobei die Summe aus o + p jeweils größer 0 ist und y gleich 2 bis 4, vorzugsweise 2,

$R^{1'}$,$R^{2'}$,$R^{3'}$,$R^{4'}$ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome, insbesondere Sauerstoff, NH, NR' mit R' gleich einem gegebenenfalls Doppelbindungen enthaltenden $C_1$-$C_{30}$-Alkylrest, insbesondere -$CH_3$, unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -($CH_3$)N-C(O)-, -(O)C-N($CH_3$)-, -S($O_2$)-O-, -O-S($O_2$)-, -S($O_2$)-NH-, - NH-S($O_2$)-, -S($O_2$)-N($CH_3$)-, -N($CH_3$)-S($O_2$)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', $NH_2$, N(H)R', N(R')$_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß $-(R^{5'}-O)_n-R^{6'}$ bedeuten,
wobei

- $R^{5'}$ ein 2 bis 4 Kohlenstoffatome enthaltender linearer oder verzweigter Kohlenwasserstoffrest,
- n 1 bis 100, vorzugsweise 2 bis 60, ist und
- $R^{6'}$ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-$R^{7'}$ mit
- $R^{7'}$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Als Kationen für das Tensid B kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (IIId), (IIIe) und (IIIf) beschreiben, wobei die heterocyclischen Ringe gegebenenfalls auch mehrere Heteroatome enthalten können,

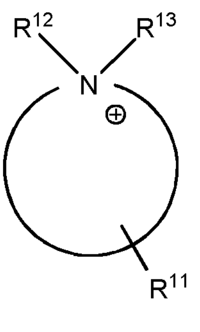
(IIId)

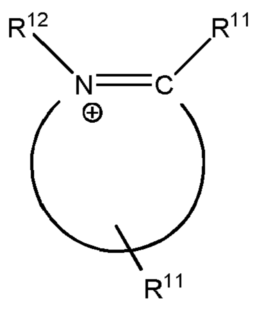
(IIIe)

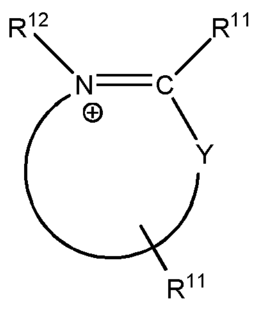
(IIIf)

worin
$R^{11}$ gleich oder unterschiedlich ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen ist,

$R^{12}$ und $R^{13}$ die für $R^{1'}$ und $R^{2'}$ genannte Bedeutung haben,

Y ein Sauerstoffatom oder ein substituiertes Stickstoffatom (Y = O,$NR^{1a}$) ist,

$R^{1a}$ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest, insbesondere -$CH_3$) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -($CH_3$)N-C(O)-, -(O)C-N($CH_3$)-, -S($O_2$)-O-, -O-S($O_2$)-, -S($O_2$)-NH-, -NH-S($O_2$)-, -S($O_2$)-N($CH_3$)-, - N($CH_3$)-S($O_2$)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', $NH_2$, N(H)R', $N(R')_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -$(R^{5'}$-$O)_n$-$R^{6'}$ bedeuten.

Beispiele für cyclische Stickstoffverbindungen der vorgenannten Art sind Pyrrolidin, Dihydropyrrol, Pyrrol, Imidazolin, Oxazolin, Oxazol, Isoxazol, Indol, Carbazol, Piperidin, Pyridin, die isomeren Picoline und Lutidine, Chinolin und iso-Chinolin. Die cyclischen Stickstoffverbindungen der allgemeinen Formeln (IIId), (IIIe) und (IIIf) können unsubstituiert ($R^{11}$ = H), einfach oder auch mehrfach durch den Rest $R^{11}$ substituiert sein, wobei bei einer Mehrfachsubstitution durch $R^{11}$ die einzelnen Reste $R^{11}$ unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4- bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen anelliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, 2,3-, 2,5- und 2,6-Dimethylpyrazin, Cimolin, Phthalazin, Chinazolin, Phenazin und Piperazin. Insbesondere vom Imidazolin und seinen Alkyl- und Phenylderivaten abgeleitete Kationen haben sich als Bestandteil bewährt.

Als Kationen kommen ferner Ionen in Betracht, welche zwei Stickstoffatome enthalten und durch die allgemeine Formel (IIIg) wiedergegeben sind

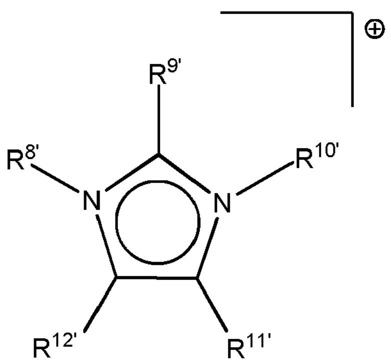

(IIIg)

in denen

$R^{8'}$,$R^{9'}$,$R^{10'}$,$R^{11'}$,$R^{12'}$ gleich oder unterschiedlich sein können und Wasserstoff, einen linearen oder verzweigten gegebenenfalls Doppelbindungen enthaltenden aliphatischen Kohlenwasserstoffrest mit 1 bis 30, vorzugsweise 1 bis 8, insbesondere 1 bis 4 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -($CH_3$)N-C(O)-, -(O)C-N($CH_3$)-, -S($O_2$)-O-, -O-S($O_2$)-, -S($O_2$)-NH-, - NH-S($O_2$)-, -S($O_2$)-N($CH_3$)-, -N($CH_3$)-S($O_2$)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', $NH_2$, N(H)R', $N(R')_2$ mit R'

gleich einem gegebenenfalls Doppelbindungen enthaltenden $C_1$-$C_{30}$-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus $-(R^{5'}-O)_n-R^{6'}$ bedeuten, wobei $R^{5'}$,n und $R^{6'}$ wie oben definiert sind.

Die Anionen X- im Tensid B sind vorzugsweise ausgewählt aus der Gruppe der Halogenide, Nitrate, Sulfate, Hydrogensulfate, Alkyl- und Arylsulfate, Polyethersulfate und -sulfonate, Sulfonate, Alkyl- und Arylsulfonate, Alkyl- und Arylcarboxylate, Saccharinate, Polyetherphosphate und Phosphate.

Als Anionen X- weisen die erfindungsgemäß einsetzbaren Tenside B bevorzugt ein Chlorid-, Phosphat- oder Methylsulfat-Anion, vorzugsweise ein Methylsulfat-Anion auf.

Es kann vorteilhaft sein, wenn die erfindungsgemäß einzusetzende Additivzusammensetzung mindestens ein Oxazasilinan aufweist. Als Oxazasilinan enthält die erfindungsgemäße Zusammensetzung vorzugsweise 2,2,4-Trimethyl-1,4,2-oxazasilinan (Formel (V))

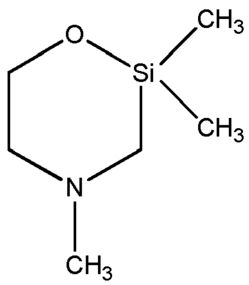

(V).

Es entspricht einer bevorzugten Ausführungsform der Erfindung, wenn die erfindungsgemäß einzusetzende Additivzusammensetzung mindestens eine tertiäre Aminverbindung C, die kein Oxazasilinan ist und eine Molmasse von mindestens 150 g/mol, besonders bevorzugt von mindestens 200 g/mol und die vorzugsweise in einer Konzentration von 0,5 Massen-% in Wasser die statische Oberflächenspannung dieser Lösung auf kleiner 40 N/m herabsetzt, aufweist, sowie außerdem mindestens ein Oxazasilinan.

Vorzugsweise ist das Tensid A ausgesucht aus solchen der Formel (IIa)

$$R^{14}\text{-}SO_3^{-}\ M^{+} \qquad \text{(IIa)}$$

mit $R^{14}$ = organischer Rest, insbesondere Kohlenwasserstoffrest oder -O-Kohlenwasserstoffrest, bevorzugt $R^{14}$ = gesättigte oder ungesättigte Kohlenwasserstoffreste mit 5 bis 30, vorzugsweise 8 bis 20 Kohlenstoffatomen, Arylreste oder Alkylarylreste, und $M^+$ = Kation, vorzugsweise Alkalimetallkation, bevorzugt Natriumkation. Bevorzugte ionische Tenside A sind z. B. solche der Formeln (IIb) bis (IId)

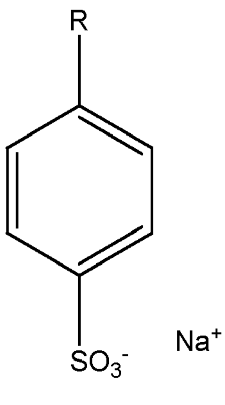

(IIb)

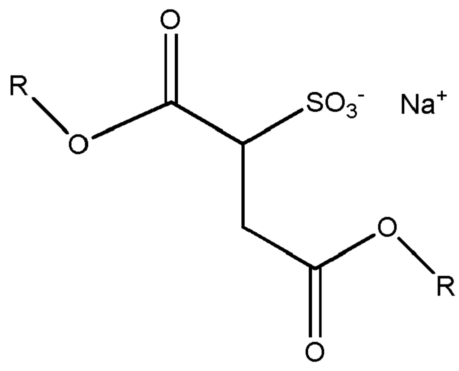

(IIc)

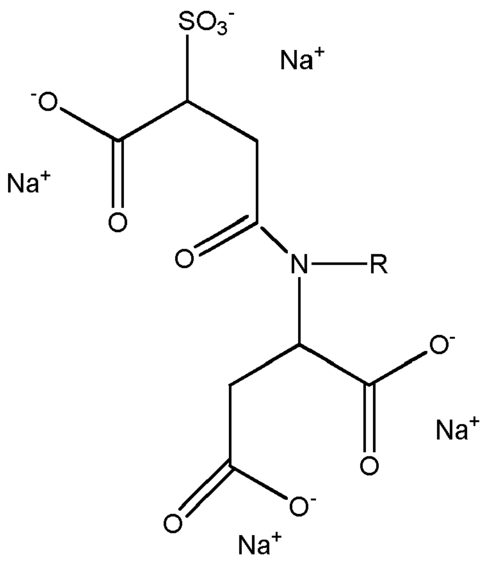

(IId).

Bevorzugte ionische Tenside B sind insbesondere Imidazolium-Verbindungen, besonders bevorzugt solche der Formel (IIIh)

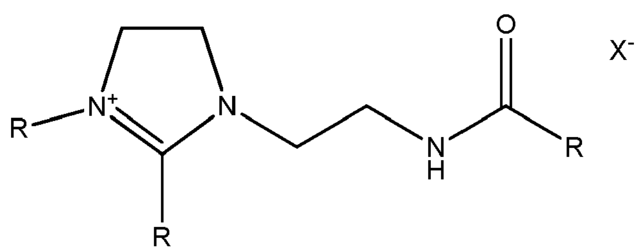

(IIIh).

Die Reste R in den Formeln (IIb) bis (IId) und (IIIh) können gleiche oder unterschiedliche, gesättigte oder ungesättigte, gegebenenfalls alkoxylierte Kohlenwasserstoffreste mit 1 bis 30, vorzugsweise 1 bis 20 Kohlenstoffatomen, sein.

In der Formel IIIh ist $X^-$ = Anion aus der Gruppe der Halogenide, Nitrate, Sulfate, Hydrogensulfate, Alkyl- und Arylsulfate, Polyethersulfate und -sulfonate, Sulfonate, Alkyl-und Arylsulfonate, Alkyl- und Arylcarboxylate, Saccharinate, Polyetherphosphate und Phosphate, vorzugsweise Chlorid-, Phosphat- oder Methylsulfat-Anion, insbesondere Methylsulfat-Anion.

Die erfindungsgemäß einsetzbaren Amine C sind vorzugsweise nicht ionisch, weisen also keine elektrische Ladung auf. Bevorzugte Amine C sind z. B. solche der Formel (IV)

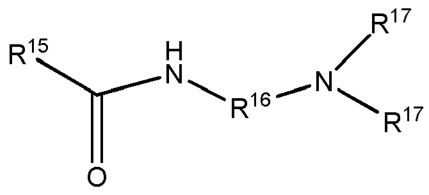

(IV)

mit
$R^{15}$ = gesättigte oder ungesättigte Kohlenwasserstoffreste mit 5 bis 30, vorzugsweise 8 bis 20 Kohlenstoffatomen,
$R^{16}$ = zweiwertiger Alkylrest mit 2 oder 3 Kohlenstoffatomen,
$R^{17}$ = gleiche oder verschiedene, vorzugsweise gleiche Alkylreste mit 1 bis 3 Kohlenstoffatomen, bevorzugt Methylreste.
Besonders bevorzugt als Amin C ist ein Dimethylaminopropyl-Cocossäureamid.

Die Menge an Tensid A wird vorzugsweise so gewählt, dass 0,001 bis 5 Gew.-Teile, insbesondere 0,01 bis 3 Gew.-Teile, besonders bevorzugt 0,05 bis 1 Gew.-Teile Tensid A pro 100 Teilen des insgesamt eingesetzten Polyol eingesetzt werden.

Die Menge an Tensid B wird vorzugsweise so gewählt, dass 0,001 bis 5 Gew.-Teile, insbesondere 0,01 bis 3 Gew.-Teile, besonders bevorzugt 0,05 bis 1 Gew.-Teile Tensid B pro 100 Teilen des insgesamt eingesetzten Polyol eingesetzt werden.

Die Menge an Amin C wird vorzugsweise so gewählt, dass 0,001 bis 5 Gew.-Teile, insbesondere 0,01 bis 3 Gew.-Teile, besonders bevorzugt 0,05 bis 1 Gew.-Teile Amin C pro 100 Teilen des insgesamt eingesetzten Polyol eingesetzt werden.

Die Menge an Oxazasilinan D wird vorzugsweise so gewählt, dass 0,0005 bis 1 Gew.-Teile, insbesondere 0,001 bis 0,5 Gew.-Teile Oxazasilinan D pro 100 Teilen des insgesamt eingesetzten Polyol eingesetzt werden.

In der erfindungsgemäß einzusetzenden Additivzusammensetzung beträgt das Massenverhältnis der Summe aller Tenside A und B zur Summe aller Amine C vorzugsweise von 20 : 1 bis 1 : 10, bevorzugt 10 : 1 bis 1 : 10 und besonders bevorzugt von 5 : 1 bis 1 : 5.

Enthält die erfindungsgemäß einzusetzende Additivzusammensetzung ein oder mehrere Oxazasilinane D, so beträgt das Massenverhältnis der Summe aller Amine C zur Summe aller Oxazasilinane D vorzugsweise von 500 : 1 bis 1 : 1, bevorzugt von 200 : 1 bis 5 : 1 und besonders bevorzugt von 50 : 1 bis 10 : 1. Als Oxazasilinan enthält die erfindungsgemäß einzusetzende Additivzusammensetzung vorzugsweise 2,2,4-Trimethyl-1,4,2-oxazasilinan Formel (V)

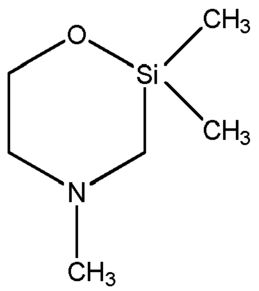

(V).

Die erfindungsgemäß einzusetzende Additivzusammensetzung kann als solche oder in Kombination mit anderen zur Herstellung von Polyurethanschäumen eingesetzten Substanzen verwendet werden.

Neben den einsetzbaren Komponenten a bis d kann die erfindungsgemäß einzusetzende Additivzusammensetzung demgemäß eine oder mehrere weitere, bei der Herstellung von Polyurethanschäumen verwendbare Substanzen, insbesondere ausgewählt aus Nukleierungsmitteln, Stabilisatoren, Zellöffnern, Vernetzern, Emulgatoren, Flammschutzmitteln, Antioxidantien, Antistatika, Bioziden, Farbpasten, festen Füllstoffen, Aminkatalysatoren, Metallkatalysatoren und Puffersubstanzen, enthalten. Dabei entspricht es einer ganz besonders bevorzugten Ausführungsform, wenn die erfindungsgemäß einzusetzende Additivzusammensetzung 0 bis 90 Gew.-%, vorzugsweise 10 bis 80 Gew.-%, besonders bevorzugt 20 bis 70 Gew.-%, bezogen auf die gesamte Additivzusammensetzung, eines oder mehrerer anorganischer oder organischer Lösungsmittel, vorzugsweise ausgewählt aus Wasser, Alkoholen, insbesondere Polyethermonoolen oder -polyolen, vorzugsweise bestehend aus H-funktionellen Startersubstanzen, an welche mittels Alkoxylierung Alkylenoxide (Epoxide) mit 2-24 Kohlenstoffatomen, vorzugsweise Ethylenoxid und/oder Propylenoxid, angelagert wurden und die ein Molekulargewicht von vorzugsweise 200 - 8000 g/mol, bevorzugt von 300-5000 g/mol, besonders bevorzugt von 500 - 1000 g/mol, und einen PO-Gehalt von vorzugsweise 10 - 100 Gew.%, bevorzugt von 50 - 100 Gew.% aufweisen sowie Polyestermonolen oder -polyolen mit einem Molekulargewicht vorzugsweise im Bereich

von 200 bis 4500 g/mol, Glykolen, Alkoxylaten, Carbonaten, Ether, Ester, verzweigten oder linearen aliphatischen oder aromatischen Kohlenwasserstoffen und/oder Ölen synthetischer und/oder natürlicher Herkunft, enthält, bezogen auf die Additivzusammensetzung.

Bevorzugt werden im erfindungsgemäßen Verfahren als Polyolkomponenten Mischungen von Polyolen eingesetzt, die mindestens 10 Gew.-%, in weiter vorteilhafter Weise mindestens 20 Gew.-%, weiter vorteilhaft mindestens 30 Gew.-%, vorzugsweise mindestens 50 Gew.-%, insbesondere mindestens 75 Gew.-% an Polyetherpolycarbonatpolyolen aufweisen, bezogen auf die gesamte eingesetzte Menge Polyol. Es entspricht einer weiteren bevorzugten Ausführungsform der Erfindung wenn als Polyolkomponente ausschließlich Polyetherpolycarbonatpolyol eingesetzt wird.

Bevorzugt weist das Polyol insgesamt einen Gehalt an Carbonatgruppen (berechnet als $CO_2$) von mindestens 1 Gew.-%, vorzugsweise von mindestens 5 Gew.-%, besonders bevorzugt von mindestens 10 Gew.-% und ganz besonders bevorzugt von 15 bis 50 Gew.-% auf.

Die Menge an Additivzusammensetzung wird vorzugsweise so gewählt, dass 0,001 bis 10 Gew.-Teile, insbesondere 0,2 bis 5 Gew.-Teile der Additivzusammensetzung pro 100 Teilen des insgesamt eingesetzten Polyol eingesetzt werden.

Die Menge an Additivzusammensetzung kann vorzugsweise so gewählt werden, dass das Massenverhältnis aller eingesetzter Polyolkomponenten zur Summe aller eingesetzten Amine C von 2000 : 1 bis 5 : 1, bevorzugt von 1000 : 1 bis 10 : 1 und besonders bevorzugt von 250 : 1 bis 20 : 1 beträgt.

Es entspricht einer bevorzugten Ausführungsform der Erfindung, wenn in dem erfindungsgemäßen Verfahren eine Additivzusammensetzung eingesetzt wird, die zumindest 2 Komponenten umfasst, nämlich

(i) mindestens ein ionisches Tensid B, ausgewählt aus einer quaternisierten Ammoniumverbindung, zumindest eine Imidazolium-Verbindung, insbesondere eine Imidazolium-Verbindung der Formel (IIIh),

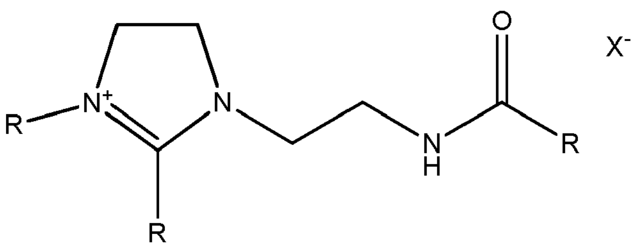

(IIIh)

mit R gleiche oder unterschiedliche, gesättigte oder ungesättigte, gegebenenfalls alkoxylierte Kohlenwasserstoffreste mit 1 bis 30 Kohlenstoffatomen,

X- = Anion aus der Gruppe der Halogenide, Nitrate, Sulfate, Hydrogensulfate, Alkyl-und Arylsulfate, Polyethersulfate und -sulfonate, Sulfonate, Alkyl- und Arylsulfonate, Alkyl- und Arylcarboxylate, Saccharinate, Polyetherphosphate und Phosphate, vorzugsweise Chlorid-, Phosphat- oder Methylsulfat-Anion, insbesondere Methylsulfat-Anion.

(ii) mindestens ein Oxazasilinan D, und zwar insbesondere 2,2,4-Trimethyl-1,4,2-oxazasilinan der Formel (V)

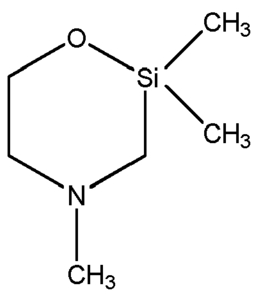

(V),

wobei als Polyolkomponente Mischungen von Polyolen eingesetzt, die vorteilhafterweise mindestens 10 Gew.-%, in weiter vorteilhafter Weise mindestens 20 Gew.-%, in noch weiter vorteilhafter Weise mindestens 30 Gew.-%, vorzugsweise mindestens 50 Gew.-%, insbesondere mindestens 75 Gew.-% Polyetherpolycarbonatpolyol aufweisen, bezogen auf die gesamte eingesetzte Menge Polyol.

Es entspricht einer bevorzugten Ausführungsform der Erfindung, wenn in dem erfindungsgemäßen Verfahren eine Additivzusammensetzung eingesetzt wird, die zumindest 2 Komponenten umfasst, nämlich

(i) als tertiäre Aminverbindung C, die eine Molmasse von vorzugsweise mindestens 150 g/mol, besonders bevorzugt mindestens 200 g/mol, aufweist und die vorzugsweise in einer Konzentration von 0,5 Massen-% in Wasser die statische Oberflächenspannung dieser Lösung auf kleiner 40 N/m herabsetzt, zumindest eine Verbindung der Formel (IV)

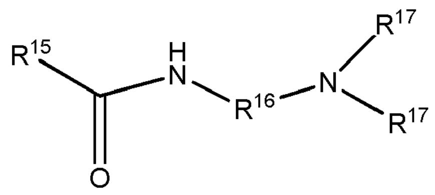

(IV)

mit
$R^{15}$= gesättigte oder ungesättigte Kohlenwasserstoffreste mit 5 bis 30, vorzugsweise 8 bis 20 Kohlenstoffatomen,
$R^{16}$ = zweiwertiger Alkylrest mit 2 oder 3 Kohlenstoffatomen,
$R^{17}$ = gleiche oder verschiedene, vorzugsweise gleiche Alkylreste mit 1 bis 3 Kohlenstoffatomen, bevorzugt Methylreste,
und zwar insbesondere Dimethylaminopropyl-Cocossäureamid,
(ii) mindestens ein ionisches Tensid B, ausgewählt aus einer quaternisierten Ammoniumverbindung, zumindest eine Imidazolium-Verbindung, insbesondere eine Imidazolium-Verbindung der Formel (IIIh),

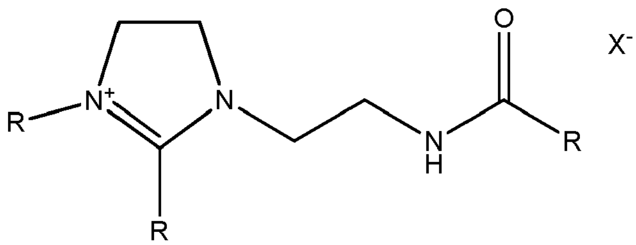

(IIIh)

mit R gleiche oder unterschiedliche, gesättigte oder ungesättigte, gegebenenfalls alkoxylierte Kohlenwasserstoffreste mit 1 bis 30 Kohlenstoffatomen,
X- = Anion aus der Gruppe der Halogenide, Nitrate, Sulfate, Hydrogensulfate, Alkyl-und Arylsulfate, Polyethersulfate und -sulfonate, Sulfonate, Alkyl- und Arylsulfonate, Alkyl- und Arylcarboxylate, Saccharinate, Polyetherphosphate und Phosphate, vorzugsweise Chlorid-, Phosphat- oder Methylsulfat-Anion, insbesondere Methylsulfat-Anion,
wobei als Polyolkomponente Mischungen von Polyolen eingesetzt, die vorteilhafterweise mindestens 10 Gew.-%, in weiter vorteilhafter Weise mindestens 20 Gew.-%, in noch weiter vorteilhafter Weise mindestens 30 Gew.-%, vorzugsweise mindestens 50 Gew.-%, insbesondere mindestens 75 Gew.-% Polyetherpolycarbonatpolyol aufweisen, bezogen auf die gesamte eingesetzte Menge Polyol.

Es entspricht einer besonders bevorzugten Ausführungsform der Erfindung, wenn in dem erfindungsgemäßen Verfahren eine Additivzusammensetzung eingesetzt wird, die zumindest 3 Komponenten umfasst, nämlich

(i) als tertiäre Aminverbindung C, die eine Molmasse von vorzugsweise mindestens 150 g/mol, besonders bevorzugt mindestens 200 g/mol aufweist und die vorzugsweise in einer Konzentration von 0,5 Massen-% in Wasser die statische Oberflächenspannung dieser Lösung auf kleiner 40 N/m herabsetzt, zumindest eine Verbindung der Formel (IV)

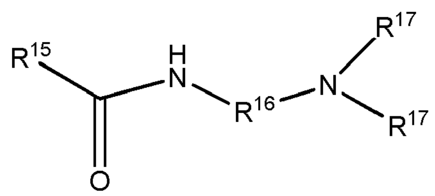

(IV)

mit
$R^{15}$= gesättigte oder ungesättigte Kohlenwasserstoffreste mit 5 bis 30, vorzugsweise 8 bis 20 Kohlenstoffatomen,
$R^{16}$ = zweiwertiger Alkylrest mit 2 oder 3 Kohlenstoffatomen,
$R^{17}$ = gleiche oder verschiedene, vorzugsweise gleiche Alkylreste mit 1 bis 3 Kohlenstoffatomen, bevorzugt Methylreste,
und zwar insbesondere Dimethylaminopropyl-Cocossäureamid,
(ii) mindestens ein ionisches Tensid B, ausgewählt aus einer quaternisierten Ammoniumverbindung, zumindest eine Imidazolium-Verbindung, insbesondere eine Imidazolium-Verbindung der Formel (IIIh),

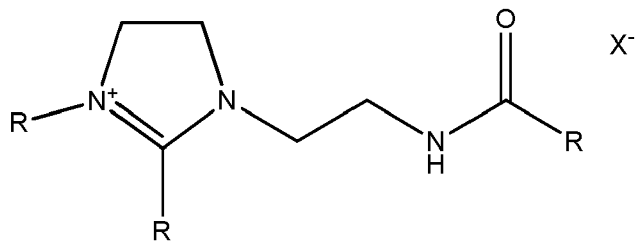

(IIIh)

mit R gleiche oder unterschiedliche, gesättigte oder ungesättigte, gegebenenfalls alkoxylierte Kohlenwasserstoffreste mit 1 bis 30 Kohlenstoffatomen,
X- = Anion aus der Gruppe der Halogenide, Nitrate, Sulfate, Hydrogensulfate, Alkyl-und Arylsulfate, Polyethersulfate und -sulfonate, Sulfonate, Alkyl- und Arylsulfonate, Alkyl- und Arylcarboxylate, Saccharinate, Polyetherphosphate und Phosphate, vorzugsweise Chlorid-, Phosphat- oder Methylsulfat-Anion, insbesondere Methylsulfat-Anion,
(iii) mindestens ein Oxazasilinan D, und zwar insbesondere 2,2,4-Trimethyl-1,4,2-oxazasilinan der Formel (V)

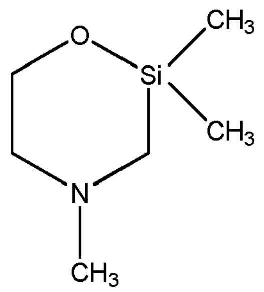

(V),

wobei als Polyolkomponente Mischungen von Polyolen eingesetzt, die vorteilhafterweise mindestens 10 Gew.-%, in weiter vorteilhafter Weise mindestens 20 Gew.-%, in noch weiter vorteilhafter Weise mindestens 30 Gew.-%, vorzugsweise mindestens 50 Gew.-%, insbesondere mindestens 75 Gew.-% Polyetherpolycarbonatpolyol aufweisen, bezogen auf die gesamte eingesetzte Menge Polyol.

Es entspricht einer besonderen Ausführungsform der Erfindung, wenn in dem erfindungsgemäßen Verfahren keine Fettsäureestersulfate zum Einsatz gelangen.

Vorzugsweise wird das PU-System, insbesondere der PU-Schaum, dadurch erzeugt, dass eine Mischung enthaltend zumindest einen Urethan- und/oder Isocyanurat-Katalysator, zumindest ein Treibmittel und/oder Wasser, zumindest eine Isocyanatkomponente und eine Polyolmischung enthaltend ein Polyetherpolycarbonatpolyol in Gegenwart der erfindungsgemäßen Additivzusammensetzung verschäumt wird.

Neben den genannten Komponenten kann die Mischung weitere Bestandteile aufweisen, wie z. B. optional (weitere) Treibmittel, optional Präpolymere, optional Flammschutzmittel und optional weitere Additive (die von den in der erfindungsgemäßen Additivzusammensetzung genannten verschieden sind), wie z. B. Füllstoffe, Emulgatoren, die auf der Umsetzung von hydroxyfunktionellen Verbindungen mit Isocyanat beruhen, Stabilisatoren, wie z. B. Si-haltige und nicht Si-haltige, insbesondere Si-haltige und nicht Si-haltige organische Stabilisatoren und Tenside, Viskositätssenker, Farbstoffe, Antioxidantien, UV-Stabilisatoren oder Antistatika. Es versteht sich von selbst, dass der Fachmann zur Herstellung der unterschiedlichen Polyurethanweichschaumstoff-Typen, d.h. Heiß-, Kalt- oder Ester-Polyurethanweichschaumstoffe, die hierfür jeweils notwendigen Substanzen, wie z. B. Isocyanat, Polyol, Präpolymer, Stabilisatoren, etc. entsprechend auswählt, um den jeweils gewünschten Polyurethanweichschaumstoff-Typ zu erhalten.

Nachstehend sind eine Reihe von Schutzrechten angegeben, die geeignete Komponenten und Verfahren zur Herstellung der unterschiedlichen Polyurethanweichschaumstoff-Typen, d.h. Heiß-, Kalt- sowie Ester-Polyurethanweichschaumstoffe beschreiben, auf die im vollen Umfang Bezug genommen wird: EP 0152878 A1, EP 0409035 A2, DE 102005050473 A1, DE 19629161 A1, DE 3508292 A1, DE 4444898 A1, EP 1061095 A1, EP 0532939 B1, EP 0867464 B1, EP 1683831 A1 und DE 102007046860 A1.

Weitere Angaben zu verwendbaren Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Die nachstehenden Verbindungen, Komponenten und Additive sind lediglich beispielhaft genannt und können durch andere dem Fachmann bekannte Stoffe ersetzt werden.

Weitere Tenside, die bei der Herstellung von Polyurethanweichschaumstoffen eingesetzt werden, können z. B. ausgewählt sein aus der Gruppe umfassend nichtionische Tenside und/oder amphotere Tenside.

Als Tenside können erfindungsgemäß beispielsweise auch polymere Emulgatoren, wie Polyalkylpolyoxyalkylpolyacrylate, Polyvinylpyrrolidone oder Polyvinylacetate verwendet werden. Ebenso können als Tenside/Emulgatoren Präpolymere, die durch Umsetzung von geringen Mengen von Isocyanaten mit Polyolen erhalten werden (sog. Oligourethane), und die vorzugsweise gelöst in Polyolen vorliegen, eingesetzt werden.

Als Schaumstabilisatoren können vorzugsweise jene eingesetzt werden, die aus dem Stand der Technik bekannt sind und auf die auch üblicherweise zur Polyurethanschaumstabilisierung zurückgegriffen wird. Hierbei kann es sich sowohl um Si-haltige und nicht Si-haltige, insbesondere Si-haltige und nicht Si-haltige organische Stabilisatoren und Tenside handeln. Die Si-haltigen Stabilisatoren werden weiterhin darin unterschieden, ob der Polyoxyalkylenblock mit dem Polysiloxanblock durch eine hydrolytisch stabile C-Si-Bindung (wie beispielsweise in EP 2182020) oder die hydrolytisch weniger stabile C-O-Si-Bindung verknüpft ist. Die zur Polyurethanschaumstabilisierung verwendbaren SiC-Polysiloxan-Polyoxyalkylen-Blockmischpolymerisate können z.B. durch edelmetallkatalysierte Hydrosilylierung von ungesättigten Polyoxyalkylenen mit SiH-funktionellen Siloxanen, sogenannten Wasserstoffsiloxanen, wie beispielsweise in der EP 1520870 beschrieben, hergestellt werden. Die Hydrosilylierung kann batchweise oder kontinuierlich, wie beispielsweise in der DE 19859759 C1 beschrieben, durchgeführt werden.

Eine Vielzahl weiterer Schriften, wie beispielsweise die EP 0493836 A1, US 5565194 oder EP 1350804 offenbaren jeweils speziell zusammengesetzte Polysiloxan-Polyoxyalkylen-Blockmischpolymerisate zur Erfüllung spezifischer Anforderungsprofile für Schaumstabilisatoren in diversen Polyurethanschaumformulierungen.

Als Biozide können handelsübliche Produkte verwendet werden, wie Chlorophen, Benzisothiazolinon, Hexahydro-1,3,5-tris(hydroxyethyl-s-triazin), Chlormethylisothiazolinon, Methylisothiazolinon oder 1,6-Dihydroxy-2,5-dioxohexan, die unter den Handelsnamen BIT 10, Nipacide BCP, Acticide MBS, Nipacide BK, Nipacide Cl, Nipacide FC bekannt sind.

Geeignete Flammschutzmittel im Sinne dieser Erfindung sind alle Substanzen, die im Stand der Technik als dafür geeignet betrachten werden. Bevorzugte Flammschutzmittel sind beispielsweise flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP), Tris(1,3-dichlor-2-propyl)phosphat (TDCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet. Alle diese Flammschutzmittel und Kombinationen daraus können im Sinne dieser Erfindung vorteilhafterweise benutzt werden, darin enthalten auch alle kommerziell erhältlichen Flammschutzmittel der Firmen Great Lakes Solutions (Chemtura) (z.B.: DP-54™, Firemaster® BZ-54 HP, Firemaster® 550, Firemaster® 552, Firemaster® 600, Firemaster® 602, Reofos® 50, Reofos® 65, Reofos® 95, Kronitex® CDP), ICL Industrial Products (z.B.: FR-513, FR-1210, FR-1410, Fyrol™ FR-2, Fyrol™ 38, Fyrol™ HF-5, Fyrol™ A300TB, Fyrol™ PCF, Fyrol™ PNX, Fyrol™ PNX-LE), Clariant (z.B.: Exolit® OP 550 oder Exolit® OP 560).

Oftmals werden alle Komponenten außer den Polyolen und Isocyanaten vor dem Verschäumen zu einer Aktivatorlösung vermischt. Diese enthält dann vorzugsweise u.a. die erfindungsgemäß verwendbare Additivzusammensetzung, Stabilisatoren, Katalysatoren bzw. Katalysatorkombination, das Treibmittel, beispielsweise Wasser, sowie eventuell weitere Additive, wie Flammschutz, Farbe, Biozide etc., je nach Rezeptur des Polyurethanweichschaumstoffs. Auch eine solche Aktivatorlösung kann eine erfindungsgemäße Zusammensetzung sein.

Bei den Treibmitteln unterscheidet man zwischen chemischen und physikalischen Treibmitteln. Zu den chemischen Treibmitteln gehört z. B. Wasser, dessen Reaktion mit den Isocyanatgruppen zur Bildung von $CO_2$ führt. Die Rohdichte des Schaumstoffes lässt sich durch die zugegebene Wassermenge steuern, wobei die bevorzugten Einsatzmengen an Wasser zwischen 0,5 und 10 Teilen, bevorzugt zwischen 1 und 7 Teilen, besonders bevorzugt zwischen 1 und 5 Teilen, bezogen auf 100,0 Teile Polyol, liegen. Darüber hinaus können alternativ und/oder auch zusätzlich, physikalische Treibmittel, eingesetzt werden. Dabei handelt es sich um Flüssigkeiten, welche gegenüber den Rezepturbestandteilen inert sind und Siedepunkte unter 100 °C, vorzugsweise unter 50 °C, insbesondere zwischen -50 °C und 30 °C bei Atmosphärendruck aufweisen, so dass sie unter dem Einfluss der exothermen Polyadditionsreaktion verdampfen. Beispiele derartiger, vorzugsweise verwendbarer Flüssigkeiten sind Ketone wie Aceton und/oder Methylethylketon,

Kohlenwasserstoffe, wie n-, iso- oder Cyclopentan, n- oder iso-Butan und Propan, Cyclohexan, Ether, wie Dimethylether und Diethylether, halogenierte Kohlenwasserstoffe, wie Methylenchlorid, Tetrafluorethan, Pentafluorpropan, Heptafluorpropan, Pentafluorbutan, Hexafluorbutan und/oder Dichlormonofluorethan, Trichlorfluormethan, Dichlortetrafluorethan und 1,1,2-Trichlor-1,2,2-trifluorethan. Des Weiteren kann auch Kohlendioxid eingesetzt werden. Auch Gemische dieser niedrigsiedenden Flüssigkeiten untereinander und/oder mit anderen substituierten oder unsubstituierten Kohlenwasserstoffen können verwendet werden. Die Verschäumung kann sowohl unter Normaldruck, als auch unter vermindertem Druck ablaufen (VPF-Technologie).

Die Menge des physikalischen Treibmittels liegt dabei vorzugsweise im Bereich zwischen 1 und 50 Gew.-Teilen, insbesondere zwischen 1 und 15 Gew.-Teilen, die Menge an Wasser vorzugsweise im Bereich zwischen 0,5 und 10 Gew.-Teilen, insbesondere 1 und 5 Gew.-Teilen. Kohlendioxid wird von den physikalischen Treibmitteln bevorzugt, welches bevorzugt in Kombination mit Wasser als chemischem Treibmittel verwendet wird.

Die Aktivatorlösung kann zusätzlich alle üblichen im Stand der Technik für Aktivatorlösungen bekannten Zusätze enthalten. Die Zusätze können ausgewählt sein aus der Gruppe umfassend Flammschutzmittel, Antioxidantien, UV-Stabilisatoren, Farbstoffe, Biozide, Pigmente, Zellöffner, Vernetzer und dergleichen.

Zur Herstellung eines Polyurethanweichschaumstoffs wird vorzugsweise ein Gemisch (Mischung) aus Polyol umfassend Polyetherpolycarbonatpolyol, di- oder polyfunktionellem Isocyanat, erfindungsgemäßer Additivzusammensetzung, Aminkatalysator, Kalium-, Zink- und/oder Zinn-organischer-Verbindung oder andere metallhaltige Katalysatoren, Stabilisator, Treibmittel, vorzugsweise Wasser zur Bildung von $CO_2$ und, falls nötig, Zusatz von physikalischen Treibmitteln, gegebenenfalls unter Zugabe von Flammschutzmitteln, Antioxidantien, UV-Stabilisatoren, Farbpasten, Bioziden, Füllstoffen, Vernetzern oder sonstigen üblichen Verarbeitungshilfsmitteln, umgesetzt. Ein solches Gemisch stellt ebenfalls einen Gegenstand der Erfindung dar. Ein Gemisch, umfassend die erfindungsgemäß einzusetzende Additivzusammensetzung und Polyol, umfassend Polyetherpolycarbonatpolyol, stellt ebenfalls einen Gegenstand der Erfindung dar sein.

Als Isocyanate können organische Isocyanatverbindungen verwendet werden, die mindestens zwei Isocyanat-Gruppen enthalten. Generell kommen die an sich bekannten aliphatischen, cycloaliphatischen, araliphatischen und vorzugsweise aromatischen mehrwertigen Isocyanate in Frage. Besonders bevorzugt werden Isocyanate in einem Bereich von 60 bis 140 mol % relativ zu der Summe der isocyanatverbrauchenden Komponenten eingesetzt.

Im Einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat und anderen Gruppen modifiziert wurden, sogenannte modifizierte Isocyanate.

Besonders bewährt haben sich als organische Polyisocyanate und kommen daher vorzugsweise zur Anwendung: Toluylendiisocyanat, Gemische aus Diphenylmethandiisocyanat-Isomeren, Gemische aus Diphenylmethandiisocyanat und Polyphenylpolymethylpolyisocyanat oder Toluylendiisocyanat mit Diphenylmethandiisocyanat und/oder Polyphenylpolymethylpolyisocyanat oder so genannte Präpolymere.

Es können sowohl TDI (2,4- und 2,6-Toluylendiisocyanat-Isomerengemisch) als auch MDI (4,4'-Diphenylmethandiisocyanat) verwendet werden. Das sogenannte "crude MDI" oder "polymere MDI" enthält neben dem 4,4'- auch die 2,4'- und 2,2'-Isomeren sowie höherkernige Produkte. Als "pure MDI" bezeichnet man zweikernige Produkte aus überwiegend 2,4'- und 4,4'-Isomerengemischen bzw. deren Präpolymere. Weitere geeignete Isocyanate sind in der Patentschrift EP 1095968 aufgeführt, auf die hier im vollen Umfang Bezug genommen wird.

Als Vernetzer werden niedermolekulare, gegenüber Isocyanaten reaktive mehrfunktionelle Verbindungen bezeichnet. Geeignet sind z.B. polyfunktionelle, insbesondere di- und trifunktionelle Verbindungen mit Molekulargewichten von 62 bis 1000 g/mol, vorzugsweise 62 bis 600 g/mol. Verwendung finden beispielsweise Di- und Trialkanolamine, wie Diethanolamin und Triethanolamin, aliphatische und aromatische Diamine, wie z. B. Ethylendiamin, Butylendiamin, Butylendiamin-1,4, Hexamethylendiamin-1,6, 4,4'-Diaminodiphenylmethan, 3,3'-dialkylsubstituierte 4,4'-Diaminodiphenylmethane, 2,4- und 2,6- Toluylendiamin und vorzugsweise aliphatische Diole und Triole mit 2 bis 6 Kohlenstoffatomen, wie Ethylenglykol, Propylenglykol, 1,4-Butylenglykol, 1,6-Hexamethylenglykol, 2-Methyl-1,3-propanediol Glycerin und Trimethylolpropan oder Ricinusöl oder Pentaerythrit, sowie höherwertige Alkohole, wie Zuckeralkohole, beispielsweise

Saccharose, Glucose oder Sorbit und alkoxylierte Verbindungen aller zuvor genannten Beispiele.

Die erfindungsgemäßen Zusammensetzungen können in der Blockverschäumung eingesetzt werden. Es können alle dem Fachmann bekannten Verfahren zur Herstellung von frei gestiegenen Polyurethanweichschaumstoffen verwendet werden. So kann zum Beispiel der Schäumungsprozess sowohl in horizontaler als auch in vertikaler Richtung in diskontinuierlichen oder kontinuierlichen Anlagen erfolgen. Ebenso können die erfindungsgemäß einsetzbaren Additivzusammensetzungen für die $CO_2$-Technologie benutzt werden. Die Verwendung in Niederdruck- und Hochdruckmaschinen ist möglich, wobei die erfindungsgemäßen Formulierungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Neben den Polyetherpolycarbonatpolyolen können als weitere Polyolkomponenten alle bekannten Polyolverbindungen in der Mischung optional enthalten sein.

Als Polyolkomponente geeignete Polyole im Sinne der vorliegenden Erfindung sind alle organischen Substanzen mit mehreren gegenüber Isocyanaten reaktiven Gruppen, vorzugsweise OH-Gruppen, sowie deren Zubereitungen. Bevorzugte Polyole sind alle zur Herstellung von Polyurethansystemen, insbesondere Polyurethanschaumstoffen üblicherweise verwendeten Polyetherpolyole und Polyesterpolyole.

Es kann sich hierbei z. B. um Polyether- oder Polyesterpolyole handeln, die typischerweise 2 bis 8 OH-Gruppen pro Molekül tragen und neben Kohlenstoff, Wasserstoff und Sauerstoff auch Heteroatome wie Stickstoff, Phosphor oder Halogene enthalten können; vorzugsweise werden Polyetherpolyole eingesetzt. Solche Polyole können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Borfluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,2-Propylenoxid, 1,2- bzw. 2,3-Butylenoxid; vorzugsweise werden Ethylenoxid und/oder 1,2-Propylenoxid eingesetzt. Die Alkylenoxide können einzeln, alternierend nacheinander oder als Mischungen verwendet werden. Als H-funktionelle Startsubstanzen kommen insbesondere mehrfunktionelle Alkohole und/oder Amine zum Einsatz. Bevorzugt eingesetzte Alkohole sind zweiwertige Alkohole, beispielsweise Ethylenglykol, Propylenglykol, oder Butandiole, dreiwertige Alkohole, beispielsweise Glycerin, Trimethylolpropan oder Ricinusöl oder Pentaerythrit, sowie höherwertige Alkohole, wie Zuckeralkohole, beispielsweise Saccharose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, aromatische Amine, beispielsweise Toluylendiamin oder Diaminodiphenylmethan, sowie Aminoalkohole, wie Ethanolamin oder Diethanolamin.

Polyesterpolyole können durch Polykondensationsreaktion oder durch ringöffnende Polymerisation dargestellt werden. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol. 1,5-Pentandiol, Neopentylglykol, 1,6-Hexandiol, 1,4-Bis(hydroxymethyl)cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyetherpolycarbonatpolyole dienen können. Bevorzugt werden Polyetherpolyole mit Mn = 150 bis 2000 g/mol zur Herstellung der Polyesteretherpolyole eingesetzt.

Die Polyetherpolyole, vorzugsweise Polyoxypropylenpolyoxyethylenpolyole besitzen typischerweise eine Funktionalität von 2 bis 8 und zahlengemittelte Molekulargewichte vorzugsweise im Bereich von 500 bis 8000, vorzugsweise 800 bis 4500. Weitere Polyole sind dem Fachmann bekannt und können zum Beispiel der EP-A-0380993 oder US-A-3346557 entnommen werden, auf die im vollen Umfang Bezug genommen wird.

Bevorzugt werden zur Herstellung von hochelastischen Polyurethan-Weichschaumstoffen (Kaltschaum) zwei- und/oder dreifunktionelle Polyetheralkohole eingesetzt, die bevorzugt über 50 mol-% primäre Hydroxylgruppen bezogen auf die Summe der Hydroxylgruppen aufweisen, insbesondere solche mit einem Ethylenoxidblock am Kettenende oder solche, die nur auf Ethylenoxid basieren.

Bevorzugt werden zur Herstellung von Blockweichschaumstoffen zwei- und/oder dreifunktionelle Polyetheralkohole eingesetzt, die sekundäre Hydroxylgruppen, bevorzugt über 80 mol-%, aufweisen, insbesondere solche mit einem Propylenoxidblock oder statistischen Propylen- und Ethylenoxidblock am Kettenende oder solche, die nur auf Propylenoxidblöcken basieren.

Eine weitere Klasse von Polyolen sind solche, die als Präpolymere durch Umsetzung von Polyol mit Isocyanat in einem Molverhältnis von 100 zu 1 bis 5 zu 1, bevorzugt 50 zu 1 bis 10 zu 1 erhalten werden. Solche Präpolymere werden vorzugsweise gelöst in Polyol eingesetzt, wobei das Polyol bevorzugt dem zur Herstellung der Präpolymeren eingesetzten Polyol entspricht.

Noch eine weitere Klasse von Polyolen stellen die sogenannten Füllkörperpolyole (Polymerpolyole) dar. Diese zeichnen sich dadurch aus, dass sie feste organische Füllstoffe bis zu einem Feststoffgehalt von 40 Gew.-% oder mehr in disperser Verteilung enthalten. Man verwendet unter anderem:

SAN-Polyole: Dies sind hochreaktive Polyole, welche ein Copolymer auf der Basis Styrol/Acrylnitril (SAN) dispergiert enthalten.

PHD-Polyole: Dies sind hochreaktive Polyole, welche Polyharnstoff ebenfalls in dispergierter Form enthalten.

PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.-%, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole werden diese alleine oder in Abmischung mit den oben genannten ungefüllten Polyolen eingesetzt.

Eine weitere Klasse von einsetzbaren Polyolen stellen die sogenannten autokatalytischen Polyole, insbesondere autokatalytische Polyetherpolyole, dar. Solche Polyole basieren zum Beispiel auf Polyether-Blöcken, vorzugsweise auf Ethylenoxid- und/oder Propylenoxid-Blöcken, und beinhalten zudem katalytisch aktive funktionelle Gruppen, wie zum Beispiel stickstoffhaltige funktionelle Gruppen, insbesondere Amino-Gruppen, vorzugsweise tertiäre Amin-Funktionen, Harnstoff-Gruppen und/oder Heterocyclen enthaltend Stickstoff-Atome. Durch die Verwendung solcher autokatalytsichen Polyole bei der Herstellung von Polyurethansystemen, insbesondere von Polyurethanschaumstoffen, bevorzugt von Polyurethanweichschaumstoffen, kann die benötigte Menge an ggf. zusätzlich verwendeten Katalysatoren je nach Anwendung gegebenenfalls reduziert und/oder auf spezielle gewünschte Schaumeigenschaften angepasst werden. Geeignete Polyole sind zum Beispiel in WO0158976 (A1), WO2005063841 (A1), WO0222702 (A1), WO2006055396 (A1), WO03029320 (A1), WO0158976 (A1), US6924321 (B2), US6762274 (B2), EP2104696 (B1), WO2004060956 (A1) oder WO2013102053 (A1) beschrieben und können zum Beispiel unter den Handelsnamen Voractiv™ und/oder SpecFlex™ Activ bei der Firma Dow bezogen werden.

Als Treibmittel können die bekannten Treibmittel eingesetzt werden. Vorzugsweise werden bei der Herstellung des Polyurethanschaums Wasser, Methylenchlorid, Pentan, Alkane, halogenierte Alkane, Aceton und/oder Kohlendioxid als Treibmittel eingesetzt.

Das Wasser kann der Mischung direkt zugegeben werden oder aber als Nebenkomponente eines der Edukte, wie z. B. der Polyolkomponente, mit dieser der Mischung zugegeben werden.

Neben physikalischen Treibmitteln und ggf. Wasser können auch andere chemische Treibmittel eingesetzt werden, die mit Isocyanaten unter Gasentwicklung reagieren, wie beispielsweise Ameisensäure.

Als Katalysatoren können im Rahmen dieser Erfindung zum Beispiel jegliche Katalysatoren für die Reaktionen Isocyanat-Polyol (Urethan-Bildung) und/oder Isocyanat-Wasser (Amin- und Kohlenstoffdioxid-Bildung) und/oder die Isocyanat-Dimerisierung (Uretdion-Bildung) Isocyanat-Trimerisierung (Isocyanurat-Bildung), Isocyanat-Isocyanat mit $CO_2$-Abspaltung (Carbodiimid-Bildung) und/oder Isocyanat-Amin (Harnstoff-Bildung) und/oder "sekundäre" Vernetzungsreaktionen wie Isocyanat-Urethan (Allophanat-Bildung) und/oder Isocyanat-Harnstoff (Biuret-Bildung) und/oder Isocyanat-Carbodiimid (Uretonimin-Bildung) eingesetzt werden.

Geeignete Katalysatoren im Sinne der vorliegenden Erfindung sind beispielsweise Substanzen, die eine der vorgenannten Umsetzungen, insbesondere die Gelreaktion (Isocyanat-Polyol), die Treibreaktion (Isocyanat-Wasser) und/oder die Di- bzw. Trimerisierung des Isocyanats katalysieren. Solche Katalysatoren sind vorzugsweise stickstoffhaltige Verbindungen, insbesondere Amine und Ammonium-Salze, und/oder metallhaltige Verbindungen.

Geeignete stickstoffhaltige Verbindungen als Katalysatoren, im Folgenden auch als stickstoffhaltige Katalysatoren bezeichnet, im Sinne der vorliegenden Erfindung sind alle stickstoffhaltigen Verbindungen nach dem Stand der Technik, die eine der oben genannten Isocyanat-Reaktionen katalysieren und/oder zur Herstellung von Polyurethanen, insbesondere von Polyurethanschaumstoffen eingesetzt werden können.

Beispiele für geeignete stickstoffhaltige Verbindungen als Katalysatoren im Sinne der vorliegenden Erfindung sind bevorzugt Amine, insbesondere tertiäre Amine oder Verbindungen enthaltend eine oder mehrere tertiäre Amin-Gruppen, wie unter anderem die Amine Triethylamin, N,N-Dimethylcyclohexylamin, N,N-Dicyclohexylmethylamin, N,N-Dimethylaminoethylamin, N,N,N',N'-Tetramethylethylen-1,2-diamin, N,N,N',N'-Tetra-methylpropylen-1,3-diamin,

N,N,N',N'-Tetramethyl-1,4-butandiamin, N,N,N',N'-Tetramethyl-1,6-hexandiamin, N,N,N',N",N"-Pentamethyldiethylentriamin, N,N,N'-Trimethylaminoethylethanolamin, N,N-Dimethylaminopropylamin, N,N-Diethylamino-propylamin, N,N-Dimethylaminopropyl-N',N'-dipropan-2-olamin, 2-[[3-(dimethylamino)propyl]methylamino]ethanol, 3-(2-Dimethylamino)ethoxy)propylamin, N,N-Bis[3-(dimethylamino)propyl]-amin, N,N,N',N",N"-Pentamethyldipropylentriamin, 1-[Bis[3-(dimethylamino)propyl]amino]-2-propanol, N,N-Bis[3-(dimethylamino)propyl]-N',N'-dimethylpropan-1,3-diamin, Triethylendiamin, 1,4-Diazabicyclo[2.2.2]octane-2-methanol, N,N'-Dimethylpiperazin, 1,2-Dimethylimidazol, N-(2-Hydroxypropyl)imidazol, 1-Isobutyl-2-methylimidazol, N-(3-Aminopropyl)imidazol, N-Methylimidazol, N-Ethylmorpholin, N-Methylmorpholin, 2,2,4-Trimethyl-2-silamorpholin, N-Ethyl-2,2-dimethyl-2-silamorpholin, N-(2-Aminoethyl)morpholin, N-(2-Hydroxyethyl)morpholin, 2,2'-Dimorpholinodiethylether, N,N'-Dimethylpiperazin, N-(2-Hydroxyethyl)piperazin, N-(2-Aminoethyl)piperazin, N,N-Dimethylbenzylamin, N,N-Dimethylaminoethanol, N,N-Diethylaminoethanol, 3-Dimethyl-amino-1-propanol, N,N-Dimethylaminoethoxyethanol, N,N-Diethylaminoethoxyethanol, Bis(2-Dimethylaminoethylether), N,N,N'-Trimethyl-N'-(2-hydroxyethyl)bis(2-aminoethyl)-ether, N,N,N'-Trimethyl-N-3'-aminopropyl(bisaminoethyl)ether, Tris(dimethylaminopropyl)-hexahydro-1,3,5-triazin, 1,8-Diazabicyclo[5.4.0]undec-7-en, 1,5-Diazabicyclo[4.3.0]non-5-en, 1,5,7-triazabicyclo[4.4.0]dec-5-en, N-Methyl-1,5,7-triazabicyclo[4.4.0]dec-5-en, 1,4,6-triazabicyclo[3.3.0]oct-4-en, 1,1,3,3-Tetramethylguanidin, tert-Butyl-1,1,3,3-Tetramethyl-guanidin, Guanidin, 3-Dimethylaminopropylharnstoff, 1,3-Bis[3-(dimethylamino)propyl]-harnstoff, Bis-N,N-(dimethylaminoethoxyethyl)isophorondicarbamat, 3-Dimethylamino-N,N-dimethylpropionamid und 2,4,6-Tris(dimethylaminomethyl)phenol. Geeignete stickstoffhaltige Katalysatoren, nach dem Stand der Technik, können zum Beispiel von der Firma Evonik unter dem Handelsnamen TEGOAMIN® bezogen werden.

Je nach Anwendung kann es bevorzugt sein, dass bei der erfindungsgemäßen Herstellung von Polyurethanschaumstoffen, quaternisierte und/oder protonierte stickstoffhaltige Katalysatoren, insbesondere quaternisierte und/oder protonierte tertiäre Amine, eingesetzt werden.

Zur möglichen Quaternisierung stickstoffhaltiger Katalysatoren können alle als Quaternisierungsreagenz bekannten Reagenzien eingesetzt werden. Vorzugsweise werden als Quaternisierungsmittel Alkylierungsmittel, wie z. B. Dimethylsulfat, Methylchlorid oder Benzylchlorid, bevorzugt Methylierungsmittel wie insbesondere Dimethylsulfat verwendet. Ebenso kann mit Alkylenoxiden wie zum Beispiel Ethylenoxid, Propylenoxid oder Butylenoxid, vorzugsweise mit anschließender Neutralisation mit anorganischen oder organischen Säuren, quaternisiert werden.

Stickstoffhaltige Katalysatoren können, sofern quaternisiert, einfach oder mehrfach quaternisiert sein. Vorzugsweise sind die stickstoffhaltigen Katalysatoren nur einfach quaternisiert. Bei einfacher Quaternisierung sind die stickstoffhaltigen Katalysatoren vorzugsweise an einem tertiären Stickstoffatom quaternisiert.

Stickstoffhaltige Katalysatoren können durch Umsetzung mit organischen oder anorganischen Säuren in die entsprechenden protonierten Verbindungen überführt werden. Diese protonierten Verbindungen können z.B. bevorzugt sein, wenn z.B. eine verlangsamte Polyurethan-Reaktion erzielt werden soll oder wenn das Reaktionsgemisch bei der Anwendung ein verbessertes Fließverhalten haben soll.

Als organische Säuren können zum Beispiel alle nachfolgend genannten organischen Säuren, beispielsweise Carbonsäuren mit 1 bis 36 Kohlenstoffatomen (aromatisch oder aliphatisch, linear oder verzweigt), beispielsweise Ameisensäure, Milchsäure, 2-Ethylhexansäure, Salicylsäure und Neodecansäure, oder auch polymere Säuren wie z.B. Polyacryl- oder Polymethacrylsäuren eingesetzt werden. Als anorganische Säuren können z.B. Phosphor-basierende Säuren, Schwefel-basierende Säuren oder Borbasierende Säuren eingesetzt werden.

Der Einsatz stickstoffhaltigen Katalysatoren, die nicht quaternisiert oder protoniert sind, ist im Sinne dieser Erfindung allerdings besonders bevorzugt.

Geeignete metallhaltige Verbindungen als Katalysatoren, im Folgenden auch als metallhaltige Katalysatoren bezeichnet, im Sinne der vorliegenden Erfindung sind alle metallhaltigen Verbindungen nach dem Stand der Technik, die eine der oben genannten Isocyanat-Reaktionen katalysieren und/oder zur Herstellung von Polyurethanen, insbesondere von Polyurethanschaumstoffen eingesetzt werden können. Sie können zum Beispiel ausgewählt werden aus der Gruppe der metallorganischen oder organometallischen Verbindungen, metallorganischen oder organometallischen Salze, organischen Metallsalze, anorganischen Metallsalze sowie aus der Gruppe der geladenen oder ungeladenen metallhaltigen Koordinationsverbindungen, insbesondere der MetallChelat-Komplexe.

Der Ausdruck "metallorganische oder organometallische Verbindungen" umfasst im Sinne dieser Erfindung insbesondere den Einsatz metallhaltiger Verbindungen, die über eine direkte Kohlenstoff-Metall-Bindung verfügen, hier auch als Metallorganyle (z.B. Zinnorganyle) oder organometallische bzw. Organometall-Verbindungen (z.B. Organozinn-Verbindungen) bezeichnet. Der Ausdruck "organometallische oder metallorganische Salze" umfasst im Sinne dieser Erfindung insbesondere den Einsatz von metallorganischen oder organometallischen Verbindungen mit Salzcharakter, das heißt Ionenverbindungen, bei denen entweder das Anion oder Kation von metallorganischer Natur ist (z.B. Organozinn-Oxide, Organozinn-Chloride oder Organozinn-Carboxylate). Der Ausdruck "organische Metallsalze" umfasst im Sinne dieser Erfindung insbesondere den Einsatz von metallhaltigen Verbindungen, die über keine direkte Kohlenstoff-Metall-Bindung verfügen und gleichzeitig Metallsalze sind, bei denen entweder das Anion oder das Kation eine organische Verbindung ist (z.B. Zinn(II)-Carboxylate). Der Ausdruck "anorganische Metallsalze" umfasst im Sinne dieser Erfindung

insbesondere den Einsatz von metallhaltigen Verbindungen oder von Metallsalzen, bei denen weder Anion noch Kation eine organische Verbindung ist, z.B. Metall-Chloride (z.B. Zinn(II)-Chlorid), reine oder gemischte, also mehrere Metalle enthaltende, Metall-Oxide (z.B. Zinn-Oxide) und/oder Metall-Silicate oder -Alumosilicate. Der Ausdruck "Koordinationsverbindung" umfasst im Sinne dieser Erfindung insbesondere den Einsatz von metallhaltigen Verbindungen, die aus einem oder mehreren Zentralteilchen und einem oder mehreren Liganden aufgebaut sind, wobei die Zentralteilchen geladene oder ungeladene Metalle sind (z.B. Metall- bzw. Zinn-Amin-Komplexe). Der Ausdruck "Metall-Chelat-Komplexe" umfasst im Sinne dieser Erfindung insbesondere den Einsatz von metallhaltigen Koordinationsverbindungen, die Liganden mit mindestens zwei Koordinations- oder Bindungsstellen zum Metallzentrum aufweisen (z.B. Metall- bzw. Zinn-Polyamin- oder Metall- bzw. Zinn-Polyether-Komplexe).

Geeignete metallhaltige Verbindungen, insbesondere wie oben definiert, als zusätzliche Katalysatoren im Sinne der vorliegenden Erfindung können zum Beispiel ausgewählt werden aus allen metallhaltigen Verbindungen enthaltend Lithium, Natrium, Kalium, Magnesium, Calcium, Scandium, Yttrium, Titan, Zirconium, Vanadium, Niob, Chrom, Molybdän, Wolfram, Mangan, Cobalt, Nickel, Kupfer, Zink, Quecksilber, Aluminium, Gallium, Indium, Germanium, Zinn, Blei, und/oder Bismuth, insbesondere Natrium, Kalium, Magnesium, Calcium, Titan, Zirconium, Molybdän, Wolfram, Zink, Aluminium, Zinn und/oder Bismuth, besonders bevorzugt Zinn, Bismuth, Zink und/oder Kalium.

Geeignete metallorganische Salze und organische Metallsalze, wie oben definiert, als Katalysatoren im Sinne der vorliegenden Erfindung sind zum Beispiel Organozinn-, Zinn-, Zink-, Bismuth und Kalium-Salze, insbesondere entsprechende Metall-Carboxylate, - Alkoholate, -Thiolate und -Mercaptoacetate, wie zum Beispiel Dibutylzinndiacetat, Dimethylzinndilaurat, Dibutylzinndilaurat (DBTDL), Dioctylzinndilaurat (DOTDL), Dimethylzinndineodecanoat, Dibutylzinndineodecanoat, Dioctylzinndineodecanoat, Dibutylzinndioleat, Dibutylzinn-bis-n-laurylmercaptid, Dimethylzinn-bis-n-laurylmercaptid, Monomethylzinn-tris-2-ethylhexylmercaptoacetat, Dimethylzinn-bis-2-ethylhexylmercapto-acetat, Dibutylzinn-bis-2-ethylhexylmercaptoacetat, Dioctylzinn-bis-isooctylmercaptoacetat, Zinn(II)-acetat, Zinn(II)-2-ethylhexanoat (Zinn(II)-octoat), Zinn(II)-isononanoat (Zinn(II)-3,5,5-trimethylhexanoat), Zinn(II)-neodecanoat, Zinn(II)-ricinoleat, Zinn(II)-oleat, Zink(II)-acetat, Zink(II)-2-ethylhexanoat (Zink(II)-octoat), Zink(II)-isononanoat (Zink(II)-3,5,5-trimethylhexanoat), Zink(II)-neodecanoat, Zink(II)-ricinoleat, Bismuthacetat, Bismuth-2-ethylhexanoat, Bismuthoctoat, Bismuthisononanoat, Bismuthneodecanoat, Kaliumformiat, Kaliumacetat, Kalium-2-ethylhexanoat (Kaliumoctoat), Kalium-isononanoat, Kalium-neodecanoat und/oder Kaliumricinoleat.

Bei der erfindungsgemäßen Herstellung von Polyurethanschaumstoffen, kann es bevorzugt sein, die Verwendung von metallorganischen Salzen wie zum Beispiel von Dibutylzinndilaurat auszuschließen.

Geeignete zusätzliche metallhaltige Katalysatoren werden in der Regel vorzugsweise so ausgewählt, dass sie keinen störenden Eigengeruch aufweisen, toxikologisch im Wesentlichen unbedenklich sind und dass die resultierenden Polyurethansysteme, insbesondere Polyurethanschäume möglichst geringe Katalysator-bedingte Emissionen aufweisen.

Bei der erfindungsgemäßen Herstellung von Polyurethanschaumstoffen, kann es je nach Art der Anwendung, bevorzugt sein, einbaubare/reaktive oder hochmolekulare Katalysatoren zu verwenden. Solche Katalysatoren können zum Beispiel ausgewählt werden aus der Gruppe der metallhaltigen Verbindungen, vorzugsweise aus der Gruppe der Zinn-, Zink-, Bismuth- und/oder Kalium-haltigen Verbindungen, insbesondere aus der Gruppe der Metall-Carboxylate der vorgenannten Metalle wie zum Beispiel die Zinn-, Zink-, Bismuth- und/oder Kaliumsalze der Isononansäure, Neodecansäure, Ricinolsäure und/oder Ölsäure, und/oder aus der Gruppe der stickstoffhaltigen Verbindungen, insbesondere aus der Gruppe der emissionsarmen Amine und/oder der emissionsarmen Verbindungen enthaltend eine oder mehrere tertiäre Amine-Gruppen, beispielsweise beschrieben durch die Amine Dimethylaminoethanol, N,N-Dimethyl-N’,N’-di(2-hydroxypropyl)-1,3-diaminopropan, N,N-Dimethylaminopropylamin, N,N,N’-Trimethyl-N’-hydroxyethylbis(aminoethyl)ether, 6-Dimethylaminoethyl-1-hexanol, N-(2-Hydroxypropyl)-imidazol, N-(3-Amino-propyl)imidazol, Aminopropyl-2-methylimidazol, N,N,N’-Trimethyl-aminoethanolamin, 2-(2-(N,N-Dimethylaminoethoxy)ethanol, N-(Dimethyl-3-aminopropyl)-harnstoff-derivate und Alkylaminooxamide, wie Bis-(N-(N’,N’-dimethylaminopropyl))oxamid, Bis-(N-(N’,N’-dimethylaminoethyl))-oxamid, Bis-(N-(N’,N’-Imidazolidinylpropyl)oxamid, Bis-(N-(N’,N’-diethylaminoethyl))-oxamid, Bis-(N-(N’,N’-diethylaminopropyl)oxamid, Bis-(N-(N’,N’-diethylaminoethyl)oxamid, Bis-(N-(N’,N’-diethylimino-1-methylpropyl)oxamid, Bis-(N-(3-Morpholinopropylyl)-oxamid und deren Umsetzungsprodukte mit Alkylenoxiden, vorzugsweise mit einem Molgewicht im Bereich zwischen 160 und 500 g/mol, sowie Verbindungen der allgemeine Formel:

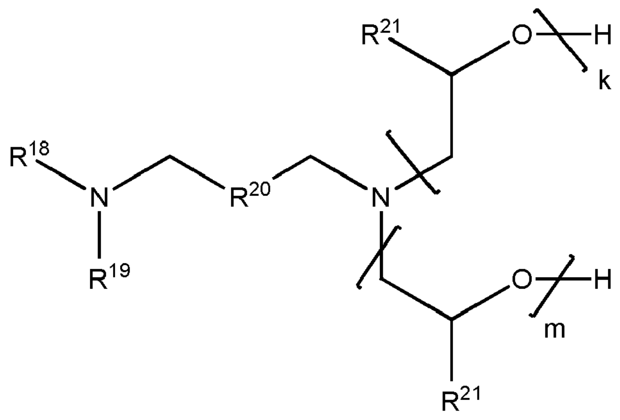

mit

R18, R19 = -CaH2a+i mit a = 1 - 4 für acylische Gruppen

R18, R19 = -CbHcNd- mit b = 3 - 7, c = 6 - 14, d = 0 - 2 für cyclische Gruppen

R20 = CeHfO9 mit e = 0 - 4, f = 0 - 8, g = 0 - 2

R21 = -H, -CH3, -C2H5

k, m = gleich oder verschieden 1 - 5.

Derartige Katalysatoren und/oder Mischungen werden beispielsweise unter dem Namen Jeffcat® ZF-10, Lupragen® DMEA, Lupragen® API, Toyocat® RX 20 und Toyocat® RX 21 , DABCO® RP 202, DABCO® RP 204, DABCO® NE 300, DABCO® NE 310, DABCO® NE 400, DABCO® NE 500, DABCO® NE 600, DABCO® NE 1060 und DABCO® NE 2039, Niax® EF 860, Niax® EF 890, Niax® EF 700, Niax® EF 705, Niax® EF 708, Niax® EF 600, Niax® EF 602, Kosmos® 54, Kosmos® EF, und Tegoamin® ZE 1 im Handel angeboten.

Geeignete Einsatzmengen an Katalysatoren richten sich nach dem Typ des Katalysators und liegen vorzugsweise im Bereich von 0,005 bis 10,0 pphp, besonders bevorzugt im Bereich von 0,01 bis 5,00 pphp (= Gewichtsteile bezogen auf 100 Gewichtsteile Polyol) bzw. 0,10 bis 10,0 pphp für Kaliumsalze.

Je nach Anwendung kann es bevorzugt sein, dass bei der erfindungsgemäßen Herstellung von Polyurethanschaumstoffen, ein oder mehrere stickstoffhaltige und/oder metallhaltige Katalysatoren eingesetzt werden. Wenn mehr als ein Katalysator eingesetzt wird, können die Katalysatoren in beliebigen Gemischen untereinander eingesetzt werden. Hierbei können die Katalysatoren einzeln während der Verschäumung, zum Beispiel im Sinne einer Vordosierung im Mischkopf, und/oder als vorgemischte Katalysatorkombination eingesetzt werden.

Der Ausdruck "vorgemischte Katalysatorkombination", im Folgenden auch als Katalysatorkombination bezeichnet, umfasst im Sinne dieser Erfindung insbesondere fertige Mischungen von metallhaltigen Katalysatoren und/oder stickstoffhaltigen Katalysatoren und/oder entsprechenden protonierten und/oder quaternisierten stickstoffhaltigen Katalysatoren sowie optional noch weiterer Inhalts- oder Zusatzstoffen wie zum Beispiel Wasser, organischen Lösungsmittelen, Säuren zur Blockierung der Amine, Emulgatoren, Tenside, Treibmitteln, Antioxidantien, Flammschutzmittel, Stabilisatoren und/oder Siloxanen, vorzugsweise Polyethersiloxanen, die bereits vor der Verschäumung als solche vorliegen und während der Verschäumungsvorgangs nicht als Einzelkomponenten zugegeben werden müssen.

Je nach Anwendung kann es bevorzugt sein, wenn aus der Summe aller eingesetzten stickstoffhaltigen Katalysatoren, gegenüber der Summe der metallhaltigen Katalysatoren, insbesondere Kalium-, Zink- und/oder Zinn-Katalysatoren, ein molares Mengenverhältnis von 1:0,05 bis 0,05:1, vorzugsweise 1:0,07 bis 0,07:1 und besonders bevorzugt 1:0,1 bis 0,1:1 resultiert.

Um eine Reaktion der Komponenten untereinander zu vermeiden, insbesondere Reaktion von stickstoffhaltigen Katalysatoren mit metallhaltigen Katalysatoren, insbesondere Kalium-, Zink- und/oder Zinn-Katalysatoren, kann es bevorzugt sein, diese Komponenten getrennt voneinander zu lagern und dann der Isocyanat- und Polyol-Reaktionsmischung gleichzeitig oder nacheinander zuzuführen.

Mittels des erfindungsgemäßen Verfahrens ist ein Polyurethansystem, vorzugsweise Polyurethanschaum, insbesondere ein Polyurethanweichschaum erhältlich. Dieses Polyurethansystem entspricht einem weiteren Gegenstand der Erfindung. Der betreffende Polyurethanschaum zeichnet sich insbesondere dadurch aus, dass die zur Herstellung verwendete Polyolkomponente zumindest teilweise auf Polyetherpolycarbonatpolyol basiert.

Mit dem erfindungsgemäßen Polyurethansystem, insbesondere Polyurethanschaum, sind Artikel zugänglich, die dieses Polyurethansystem, insbesondere Polyurethanschaum, enthalten oder aus ihm bestehen. Diese Artikel stellen einen weiteren Gegenstand dieser Erfindung dar. Solche Artikel können z. B. Möbelpolster oder Matratzen sein.

Ein weiterer Gegenstand dieser Erfindung ist außerdem ein Polyurethansystem, enthaltend die Umsetzungsprodukte von Polyetherpolycarbonatpolyolen, sowie ggf. weiterer Polyolkomponenten, mit einer oder mehrerer Isocyanatkomponenten,
wobei das eingesetzte Polyol insgesamt mindestens 1 Gew.-%, vorzugsweise mindestens 5 Gew.-% Kohlenstoffdioxid, gebunden als Carbonat enthält, und wobei mindestens 10 Gew.-% des eingesetzten Polyols als Polyetherpolycarbonatpolyol
vorliegt, Gew.-% jeweils bezogen auf die gesamte eingesetzte Menge Polyol,
wobei zumindest eine, vorzugsweise zwei, vorteilhafterweise drei und insbesondere alle, der nachfolgenden Verbindungen a) bis d) enthalten sind:

a) ionisches Tensid A, ausgewählt aus solchen der Formeln (II) $A^-M^+$ (II)
mit $A^-$ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und $M^+$ = Kation, welches kein Ammoniumkation ist, vorzugsweise Metallkation, bevorzugt Alkalimetallkation und besonders bevorzugt Kalium- oder Natriumkation,
b) ionisches Tensid B, ausgewählt aus einer quaternisierten Ammoniumverbindung,
c) eine tertiäre Aminverbindung C, die kein Oxazasilinan ist und eine Molmasse von vorzugsweise mindestens 150 g/mol, besonders bevorzugt mindestens 200 g/mol aufweist, und die vorzugsweise in einer Konzentration von 0,5 Massen-% in Wasser die statische Oberflächenspannung dieser Lösung auf kleiner 40 N/m herabsetzt,
d) Oxazasilinan D.

Ein weiterer Gegenstand dieser Erfindung ist außerdem ein Polyurethansystem, enthaltend die Umsetzungsprodukte von Polyetherpolycarbonatpolyolen, sowie ggf. weiterer Polyolkomponenten, mit einer oder mehrerer Isocyanatkomponenten,
wobei das eingesetzte Polyol insgesamt mindestens 1 Gew.-%, vorzugsweise mindestens 5 Gew.-% Kohlenstoffdioxid, gebunden als Carbonat enthält, und wobei mindestens 10 Gew.-% des eingesetzten Polyols als Polyetherpolycarbonatpolyol vorliegt, Gew.-% jeweils bezogen auf die gesamte eingesetzte Menge Polyol,
und umfassend eine Additivzusammensetzung enthaltend

a) mindestens ein ionisches Tensid A, ausgewählt aus solchen der Formeln (II)

$$A^-M^+ \qquad (II)$$

mit $A^-$ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und $M^+$ = Kation, welches kein Ammoniumkation ist, vorzugsweise Metallkation, bevorzugt Alkalimetallkation und besonders bevorzugt Kalium- oder Natriumkation,
und/oder
b) mindestens ein ionisches Tensid B, ausgewählt aus einer quaternisierten Ammoniumverbindung,
sowie
c) mindestens eine tertiäre Aminverbindung C, die kein Oxazasilinan ist und eine Molmasse von vorzugsweise mindestens 150 g/mol, besonders bevorzugt mindestens 200 g/mol aufweist, und die vorzugsweise in einer Konzentration von 0,5 Massen-% in Wasser die statische Oberflächenspannung dieser Lösung auf kleiner 40 N/m herabsetzt,
und/oder, vorzugsweise und,
d) mindestens ein Oxazasilinan D.

Ein weiterer Gegenstand dieser Erfindung ist außerdem eine Zusammensetzung geeignet zur Herstellung von Polyurethanschäumen, welche eine Mischung aus Polyol und einer Additivzusammensetzung, wie zuvor beschrieben umfasst, wobei

i) das eingesetzte Polyol insgesamt mindestens 1 Gew.-%, vorzugsweise mindestens 5 Gew.-%, besonders bevorzugt mindestens 10 Gew.-% und ganz besonders bevorzugt 15 bis 50 Gew.-% Kohlenstoffdioxid, gebunden als Carbonat enthält und
ii) mindestens 10 Gew.-%, vorteilhafterweise mindestens 20 Gew.-%, in weiter vorteilhafter Weise mindestens 30 Gew.-%, vorzugsweise mindestens 50 Gew.-%, insbesondere mindestens 75 Gew.-% des eingesetzten Polyols als Polyetherpolycarbonatpolyol vorliegt, Gew.-% jeweils bezogen auf die gesamte eingesetzte Menge Polyol,

Eine solche erfindungsgemäße Zusammensetzung kann insbesondere nur die Additivzusammensetzung und das Polyetherpolycarbonatpolyol enthalten. Die Additivzusammensetzung ist in dem Polyetherpolycarbonatpolyol ohne

weiteres lösbar. Insbesondere kann diese Zusammensetzung 0 bis 90 Gew.-%, vorzugsweise 10 bis 80 Gew.-%, besonders bevorzugt 20 bis 70 Gew.-%, bezogen auf die gesamte Additivzusammensetzung, eines oder mehrerer anorganischer oder organischer Lösungsmittel, vorzugsweise ausgewählt aus Wasser, Alkoholen, insbesondere Polyethermonoolen oder -polyolen, vorzugsweise bestehend aus H-funktionellen Startersubstanzen, an welche mittels Alkoxylierung Alkylenoxide (Epoxide) mit 2-24 Kohlenstoffatomen, vorzugsweise Ethylenoxid und/oder Propylenoxid, angelagert wurden und die ein Molekulargewicht von vorzugsweise 200 - 8000 g/mol, bevorzugt von 300 - 5000 g/mol, besonders bevorzugt von 500 - 1000 g/mol, und einen PO-Gehalt von vorzugsweise 10 - 100 Gew.%, bevorzugt von 50 - 100 Gew.% aufweisen sowie Polyestermonolen oder -polyolen mit einem Molekulargewicht vorzugsweise im Bereich von 200 bis 4500 g/mol, Glykolen, Alkoxylaten, Carbonaten, Ether, Ester, verzweigten oder linearen aliphatischen oder aromatischen Kohlenwasserstoffen und/oder Ölen synthetischer und/oder natürlicher Herkunft, enthalten.

Der Begriff der Zusammensetzung in diesem Sinne umfasst auch Mehrkomponentenzusammensetzungen, bei denen zwei oder mehr Komponenten zu mischen sind, um eine chemische Reaktion zu erzeugen, welche zur Herstellung des Polyurethansystems, insbesondere von Polyurethanschaum, führt. Der Begriff der Zusammensetzung umfasst insbesondere das Gemisch (Mischung) wenigstens eines Urethan- und/oder Isocyanurat-Katalysators, wenigstens eines Treibmittels, wenigstens einer Isocyanatkomponente und wenigstens einer Polyolkomponente, wobei bezogen auf die gesamte Menge Polyol

i) das eingesetzte Polyol insgesamt mindestens 1 Gew.-%, vorzugsweise mindestens 5 Gew.-% Kohlenstoffdioxid, gebunden als Carbonat enthält und
ii) mindestens 10 Gew.-% des eingesetzten Polyols als Polyetherpolycarbonatpolyol vorliegt, Gew.-% jeweils bezogen auf die gesamte eingesetzte Menge Polyol.

Eine bevorzugte erfindungsgemäße Zusammensetzung zur Herstellung eines Polyurethansystems, insbesondere von Polyurethanschaum, kann Polyol in Mengen von 25 bis 80 Gew.-%, Wasser in Mengen von 1 bis 5 Gew.-%, Katalysator in Mengen von 0,05 bis 1 Gew.-%, physikalisches Treibmittel in Mengen von 0 bis 25 Gew.-% (z.B. 0,1 bis 25 Gew.-%), Stabilisatoren (wie z. B. Si-haltige und nicht Si-haltige, insbesondere Si-haltige und nicht Si-haltige organische Stabilisatoren und Tenside) in Mengen von 0,1 bis 5 Gew.-%, Isocyanat in Mengen von 20 bis 50 Gew.% und die erfindungsgemäß einzusetzende Additivzusammensetzung in Mengen von 0,001 bis 10 Gew.-%, vorzugsweise 0,1 bis 5 Gew-%, enthalten, wobei bezogen auf die gesamte Menge Polyol mindestens 10 Gew.-%, vorteilhafterweise mindestens 20 Gew.-%, in weiter vorteilhafter Weise mindestens 30 Gew.-%, vorzugsweise mindestens 50 Gew.-%, insbesondere mindestens 75 Gew.-% Polyetherpolycarbonatpolyol enthalten sind, wobei das Polyol insgesamt einen Gehalt an Carbonatgruppen (berechnet als $CO_2$) von mindestens 1 Gew.-%, vorzugsweise von mindestens 5 Gew.-%, besonders bevorzugt von mindestens 10 Gew.-% und ganz besonders bevorzugt von 15 bis 50 Gew.-% aufweist.

Bezüglich bevorzugter Ausführungsformen dieser vorgenannten Zusammensetzungen wird ausdrücklich auf die vorangegangene Beschreibung verwiesen.

Ein weiterer Gegenstand der vorliegenden Erfindung ist die Verwendung einer Additivzusammensetzung enthaltend

a) mindestens ein ionisches Tensid A, ausgewählt aus solchen der Formeln (II)

$$A^-M^+ \qquad (II)$$

mit $A^-$ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und $M^+$ = Kation, welches kein Ammoniumkation ist, vorzugsweise Metallkation, bevorzugt Alkalimetallkation und besonders bevorzugt Kalium- oder Natriumkation,
und/oder
b) mindestens ein ionisches Tensid B, ausgewählt aus einer quaternisierten Ammoniumverbindung,
sowie
c) mindestens eine tertiäre Aminverbindung C, die kein Oxazasilinan ist und eine Molmasse von vorzugsweise mindestens 150 g/mol, besonders bevorzugt mindestens 200 g/mol aufweist, und die vorzugsweise in einer Konzentration von 0,5 Massen-% in Wasser die statische Oberflächenspannung dieser Lösung auf kleiner 40 N/m herabsetzt,
und/oder, vorzugsweise und,
d) mindestens ein Oxazasilinan D,

zur Herstellung von Polyurethanschäumen durch Umsetzung einer oder mehrerer Polyolkomponenten mit einer oder mehrerer Isocyanatkomponenten, wobei

wobei

i) das eingesetzte Polyol insgesamt mindestens 1 Gew.-%, vorzugsweise mindestens 5 Gew.-% Kohlenstoffdioxid, gebunden als Carbonat enthält und
ii) mindestens 10 Gew.-% des eingesetzten Polyols als Polyetherpolycarbonatpolyol vorliegt, Gew.-% jeweils bezogen auf die gesamte eingesetzte Menge Polyol.

Es entspricht dabei einer bevorzugten Ausführungsform, wenn die erfindungsgemäß einzusetzende Additivzusammensetzung 0 bis 90 Gew.-%, vorzugsweise 10 bis 80 Gew.-%, besonders bevorzugt 20 bis 70 Gew.-%, bezogen auf die gesamte Additivzusammensetzung, eines oder mehrerer anorganischer oder organischer Lösungsmittel, vorzugsweise ausgewählt aus Wasser, Alkoholen, insbesondere Polyethermonoolen oder -polyolen, vorzugsweise bestehend aus H-funktionellen Startersubstanzen, an welche mittels Alkoxylierung Alkylenoxide (Epoxide) mit 2-24 Kohlenstoffatomen, vorzugsweise Ethylenoxid und/oder Propylenoxid, angelagert wurden und die ein Molekulargewicht von vorzugsweise 200 - 8000 g/mol, bevorzugt von 300-5000 g/mol, besonders bevorzugt von 500 - 1000 g/mol, und einen PO-Gehalt von vorzugsweise 10 - 100 Gew.%, bevorzugt von 50 - 100 Gew.% aufweisen sowie Polyestermonolen oder -polyolen mit einem Molekulargewicht vorzugsweise im Bereich von 200 bis 4500 g/mol, Glykolen, Alkoxylaten, Carbonaten, Ether, Ester, verzweigten oder linearen aliphatischen oder aromatischen Kohlenwasserstoffen und/oder Ölen synthetischer und/oder natürlicher Herkunft, enthält.
Bezüglich bevorzugter Ausführungsformen dieser vorgenannten Verwendung wird ausdrücklich auf die vorangegangene Beschreibung verwiesen.
Ein weiterer Gegenstand der Erfindung ist die Verwendung der erfindungsgemäß erhältlichen Polyurethansysteme als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratze, Möbelpolster, Werkstoff in Kraftfahrzeuginnenräumen, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte, insbesondere als Werkstoff in Kraftfahrzeuginnenräumen.
Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

## Beispiele

### Herstellung der Polyurethanschäume

Zur Herstellung der Polyurethanschäume wurden jeweils 400 g Polyol eingesetzt; die anderen Formulierungsbestandteile wurden entsprechend umgerechnet. Dabei bedeutete beispielsweise 1,0 Teil einer Komponente 1 g dieser Substanz je 100 g Polyol.
Zur Verschäumung wurden das Polyol, Wasser, Katalysator (Amin(e) und/oder die Zinnverbindung), Stabilisator und erfindungsgemäße Additivzusammensetzung unter Rühren gut vermischt. Nach Zugabe des Isocyanats wurde mit einem Rührer 7 Sek. bei 3000 U/Min. gerührt und das Gemisch in einem mit Papier ausgekleideten Holzkasten (Grundfläche 27 cm x 27 cm) gegossen. Entstandene Polyurethanweichschäume wurden den nachfolgend beschriebenen anwendungstechnischen Tests unterzogen.
Drei Rezepturen wurden zur Demonstration der vorliegenden Erfindung für Polyurethanweichverschäumungen verwendet. Alle drei Rezepturen sind durch Wasser getrieben und frei gestiegen (Schaum kann ungehindert aufsteigen; keine Formschäume). Die Wassermenge wurde mit 4,0 Teilen pro 100 Teile Polyolmischung gewählt. Aufgrund dieser Wassermenge kann ein Raumgewicht von etwa 25 kg/m$^3$ erwartet werden. Somit ist die Formulierung hinsichtlich Raumgewicht und Wassermenge typisch für Polyurethanweichschaumqualitäten, die derzeit in der Industrie für Polster- oder Matratzenanwendungen eingesetzt werden. Gemäß Rezeptur 2 in Tabelle 2 basierend auf 4,0 Teilen Wasser wurden Polyurethanweichblockschäume unter Verwendung eines Polyetherpolycarbonatpolyols, ggf. unter Zusatz eines konventionellen Polyols, eines konventionellen Stabilisators (TEGOSTAB® BF 2370, Evonik Industries AG) und unterschiedlichen Mengen an erfindungsgemäßem Additiv hergestellt. Gemäß Rezeptur 3 in Tabelle 3 basierend auf 4,0 Teilen Wasser wurden Polyurethanweichblockschäume unter Verwendung eines Polyols basierend auf einem Polyetherpolycarbonatpräpolymer, eines konventionellen Stabilisators (TEGOSTAB® BF 2370, Evonik Industries AG) und unterschiedlichen Mengen an erfindungsgemäßem Additiv hergestellt. Die resultierenden Schäume wurden hinsichtlich ihrer Charakteristik beim Schäumvorgang und ihrer physikalischen Eigenschaften miteinander verglichen. Als Referenzschäume dienten zum einen ein Polyurethanweichschaum der aus 100% Standardpolyol (petrochemischen Ursprungs) hergestellt wurde (Tabelle 1, Rezeptur 1) und zum anderen Polyurethanweichschäume entsprechend Tabelle 2 und Tabelle 3 ohne Zusatz des erfindungsgemäßen Additivs.
Referenzschäume, die kein Polyol auf Basis von Polyetherpolycarbonaten aufweisen, wurden gemäß der in

Tabelle 1 angegebenen Rezeptur hergestellt:

Tabelle 1: Rezeptur 1 für den Referenzschaum aus rein Mineralöl-basiertem Polyol (Angaben in Massenteilen)

| | |
|---|---|
| 100 Teile | Polyol, Voranol® CP 3322 (Dow Chemical) *1 |
| 4,0 Teile | Wasser |
| 0,8 Teile | Stabilisator TEGOSTAB® BF 2370 (Evonik Industries AG) |
| 0,15 Teile | Aminkatalysator* |
| 0,18 Teile | KOSMOS® 29 (Zinnoctoat, Evonik Industries AG) |
| 49,7 Teile<br>Index <108> | Desmodur® T 80 (Toluylendiisocyanat T80)<br>(80% 2,4-Isomer, 20% 2,6-Isomer) (Bayer Material Science AG) |
| * wahlweise: TEGOAMIN® 33 (Evonik Industries AG), TEGOAMIN® B75 (Evonik Industries AG), TEGOAMIN® SMP (Evonik Industries AG) oder TEGOAMIN® DMEA (Evonik Industries AG), TEGOAMIN® ZE 3 (Evonik Industries AG).<br>*1 = Voranol® CP 3322, erhältlich bei der Firma Dow Chemical, hierbei handelt es sich um ein Polyethertriol mit der OH-Zahl 47. | |

Die Polyurethanschäume, die ein Polyol basierend auf Polyetherpolycarbonaten aufweisen, wurden gemäß der in Tabelle 2 angegebenen Rezeptur hergestellt.

Tabelle 2: Rezeptur 2 mit Polyetherpolycarbonatpolyol (Angaben in Massenteilen)

| | |
|---|---|
| 100 Teile | Polyol*2 oder Polyolmischung *3 je mit 14 Gew.-% $CO_2$ gebunden als Carbonat, Gew.-% bezogen auf die gesamt eingesetzte Menge an Polyol |
| 4,0 Teile | Wasser gesamt |
| 0,8 Teile | Stabilisator TEGOSTAB® BF 2370 (Evonik Industries AG) |
| 0,15 Teile | Aminkatalysator* |
| 0,18 Teile | KOSMOS®29 (Zinnoctoat, Evonik Industries AG) |
| a) 0 Teile<br>b) 1,5 Teile | Erfindungsgemäßes Additiv |
| 49,7 Teile<br>Index <108> | Desmodur® T 80 (Toluylendiisocyanat T80)<br>(80% 2,4-Isomer, 20% 2,6-Isomer) (Bayer Material Science AG) |
| * wahlweise: TEGOAMIN® 33 (Evonik Industries AG), TEGOAMIN® B75 (Evonik Industries AG), TEGOAMIN® SMP (Evonik Industries AG) oder TEGOAMIN® DMEA (Evonik Industries AG), TEGOAMIN® ZE 3 (Evonik Industries AG).<br>*2 Polyol dargestellt nach WO 2008/058913 in Anlehnung an Beispiel 2.<br>*3 = Polyolmischungen werden erhalten durch Abmischen von Polyol 211-10 der Firma Novomer (Polyethercarbonatpolyol, MW = 880, OH-Zahl = 127, $CO_2$-Gehalt = 43 Gew.-%) mit Voranol® CP 3322 der Firma Dow Chemical. | |

Die Schäume, die ein Polyol basierend auf einem Polyetherpolycarbonatpräpolymer aufweisen, wurden gemäß der in Tabelle 3 angegebenen Rezeptur hergestellt.

Tabelle 3: Rezeptur 3 mit Polyetherpolycarbonatpräpolymer (Angaben in Massenteilen)

| | |
|---|---|
| 100 Teile | Präpolymer, enthaltend 14 Gew.-% $CO_2$*4 gebunden als Carbonat, Gew.-% bezogen auf die gesamt eingesetzte Menge an Polyol |
| 4,0 Teile | Wasser |
| 0,8 Teile | Stabilisator TEGOSTAB® BF 2370 (Evonik Industries AG) |
| 0,15 Teile | Aminkatalysator* |
| 0,18 Teile | KOSMOS® 29 (Zinnoctoat, Evonik Industries AG) |
| a) 0 Teile<br>b) 1,5 Teile | Erfindungsgemäßes Additiv |

(fortgesetzt)

| | |
|---|---|
| 49,7 Teile<br>Index <108> | Desmodur® T 80 (Toluylendiisocyanat T80)<br>(80% 2,4-Isomer, 20% 2,6-Isomer) (Bayer Material Science AG) |
| * wahlweise: TEGOAMIN® 33 (Evonik Industries AG), TEGOAMIN® B75 (Evonik Industries AG), TEGOAMIN® SMP (Evonik Industries AG) oder TEGOAMIN® DMEA (Evonik Industries AG), TEGOAMIN® ZE 3 (Evonik Industries AG).<br>*4 = Präpolymer 14% $CO_2$, dargestellt aus Voranol® CP 3322, erhältlich bei der Firma Dow Chemical und Polyol 211-10 der Firma Novomer durch Umsatz mit zwei Teilen Toluylendiisocyanat T80 unter Einsatz von 0,06 Teilen Kosmos EF (Sn Katalysator der Firma Evonik Industries AG) als Katalysator (Reaktionsbedingungen: 100°C, 1 h). | |

Das jeweils verwendete erfindungsgemäße Additiv beinhaltete die folgenden Komponenten:

Tensid A: Rewopol B 2003 (Anionisches Sulfonat Tensid, Evonik Industries AG)

Tensid B: Rewoquat W 3690 (Quaternisierte Ammoniumverbindung, Evonik Industries AG)

Tertiäres Amin C: Tego Amid D 5040, statische Oberflächenspannung 0,5%ig in Wasser: 27,7 mN/m, (Cocosfettsäureamidamin, Evonik Industries AG)

Oxazasilinan D: 2,2,4-Trimethyl-1,4,2-oxazasilinan (Apollo Scientific Ltd.)

**Anwendungstechnische Tests**

Die hergestellten Schäume wurden anhand folgender physikalischer Eigenschaften bewertet:

a) Rücksacken des Schaumstoffes nach dem Ende der Steigphase (=Rückfall). Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
b) Schaumhöhe
Schaumhöhe ist die Höhe des gebildeten, frei gestiegenen Schaums nach 3 Minuten. Die Schaumhöhe wird in Zentimeter (cm) angegeben.
c) Steigzeit
Die Zeitspanne zwischen dem Ende des Mischens der Reaktionskomponenten und dem Abblasen des Polyurethanschaums.
d) Raumgewicht
Die Bestimmung erfolgt, wie in DIN EN ISO 845:2009-10 beschrieben, durch Messung der Rohdichte. Das Raumgewicht wird in $kg/m^3$ angegeben.
e) Die Luftdurchlässigkeit
Die Luftdurchlässigkeit des Schaums wurde in Anlehnung an DIN EN ISO 4638:1993-07 durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen.
Die Messung des Staudrucks erfolgte mittels einer Apparatur umfassend eine Stickstoffquelle, Reduzierventil mit Manometer, Durchflussregelschraube, Waschflasche, Durchflussmessgerät, T-Stück, Auflagedüse und einem skaliertem Glasrohr, in welches Wasser gefüllt ist. Die Auflagedüse weist eine Kantenlänge von 100 x 100 mm, ein Gewicht von 800 g, eine lichte Weite der Austrittsöffnung von 5 mm, eine lichte Weite des unteren Auflageringes von 20 mm und einen Außendurchmesser des unteren Auflageringes von 30 mm auf.
Die Messung erfolgt durch Einstellung des Stickstoffvordrucks per Reduzierventil auf 1 bar und Einregeln der Durchflussmenge auf 480 l/h. Die Wassermenge wird im skalierten Glasrohr so eingestellt, dass keine Druckdifferenz aufgebaut und ablesbar ist. Für die Vermessung des Prüfkörpers mit einer Dimension von 250 x 250 x 50 mm wird die Auflagedüse an den Ecken des Prüfkörpers kantenkongruent aufgelegt sowie einmal an der (geschätzten) Mitte des Prüfkörpers (jeweils auf der Seite mit der größten Oberfläche) aufgelegt. Abgelesen wird, wenn sich ein konstanter Staudruck eingestellt hat.
Die Auswertung erfolgt durch Mittelwertbildung über die fünf erhaltenen Messwerte.
f) Zahl der Zellen pro cm (Zellzahl): Diese wird auf einer Schnittfläche optisch bestimmt (gemessen gemäß DIN EN

15702).

g) Stauchhärte CLD 40% nach DIN EN ISO 3386-1:1997 + A1:2010. Die Angabe der Messwerte erfolgt in Kilopascal (kPa).

h) Zugfestigkeit und Bruchdehnung nach DIN EN ISO 1798:2008.

**Ergebnisse der Verschäumungen:**

Die Ergebnisse der anwendungstechnischen Tests für die verschiedenen Rezepturen und verwendeten Additive sind in Tabellen 4 bis 6 wiedergegeben.

Tabelle 4: Verschäumungsergebnisse bei Verwendung von TEGOAMIN® 33 (Evonik Industries AG) als Aminkatalysator

| **Versuchsnummer** | **1** | **2** | **3** | **4** | **5** | **6** | **7** |
|---|---|---|---|---|---|---|---|
| **Rezeptur** | **1** | **2a)** | **2b)** | **2a)** | **2b)** | **3a)** | **3b)** |
| **Präpolymer 14% $CO_2$** | | | | | | 100 | 100 |
| **Polyol/Polyolmischung 14% $CO_2$** | | 100*2 | 100*2 | 100*3 | 100*3 | | |
| **Polyol 0% $CO_2$** | 100 | | | | | | |
| **Aminkatalysator** | **TA 33** | **TA 33** | **TA 33** | **TA 33** | **TA 33** | **TA 33** | **TA 33** |
| | | | | | | | |
| **Steigzeit** | 104 | 128 | 110 | 115 | 108 | 126 | 89 |
| **Höhe** | 30,4 | 27,9 | 29,8 | 28,0 | 29,9 | 27 | 30,8 |
| **Blow Off** | ja | ja | ja | ja | ja | ja | ja |
| **Rückfall** | -0,2 | -0,8 | -0,4 | -0,9 | -0,4 | -0,3 | -0,3 |
| | | | | | | | |
| **Dichte** | 24,5 | 25,3 | 25,2 | 25,5 | 25,0 | 23,9 | 22,9 |
| **Porosität** | 6 | 15 | 18 | 17 | 28 | 23 | 38 |
| **Stauchhärte CLD 40%** | 3 | 3,8 | 3,7 | 3,4 | 3,4 | 4,5 | 4,4 |
| **Zellzahl** | 17 | 16 | 17 | 17 | 15-16 | 16 | 18 |
| **Bruchdehnung (%)** | 272 | 201 | 263 | 213 | 256 | 95 | 144 |
| **Zugfestigkeit (kPa)** | 94 | 69 | 87 | 72 | 88 | 66 | 79 |

*2 Polyol dargestellt nach WO 2008/058913 in Anlehnung an Beispiel 2.
*3 Polyolmischungen werden erhalten durch Abmischen von Polyol 211-10 der Firma Novomer (Polyethercarbonatpolyol, MW = 880, OH-Zahl = 127, $CO_2$-Gehalt = 43 Gew.-%) mit Voranol® CP 3322 der Firma Dow Chemical.

Versuchsnummern 3, 5 und 7 in Tabelle 4 sind erfindungsgemäß. Es zeigte sich bei den Versuchsreihen mit TEGOAMIN® 33 (Evonik Industries AG) als Aminkatalysator (Tabelle 4), dass PUR-Weichschäume, dargestellt durch Verwendung eines kohlenstoffdioxidhaltigen Polyols im Gegensatz zu Schäumen basierend auf konventionellem Polyol (Referenzschaum Versuchsnummer 1) ohne Verwendung des erfindungsgemäßen Additivs verlängerte Steigzeiten und geringere Gasausbeuten aufwiesen (Versuchsnummer 2, 4 und 6). Durch den Zusatz von 1,5 Teilen des erfindungsgemäßen Additivs konnte die Steigzeit signifikant reduziert und die Gasausbeuten auf ein Niveau mit dem Referenzschaum erhöht werden (Versuchsnummer 3, 5 und 7). Ebenso konnte die Zugfestigkeit und die Bruchdehnung, welche durch die Verwendung von $CO_2$-haltigem Polyol stark reduziert wurde (Versuchsnummer 2, 4 und 6, Referenzschaum Versuchsnummer 1), durch den Zusatz von 1,5 Teilen des erfindungsgemäßen Additivs wieder deutlich erhöht werden (Versuchsnummer 3, 5 und 7). Des Weiteren zeigte sich, dass die Verwendung von $CO_2$-haltigem Polyol in Form eines Präpolymers zu Schäumen mit stark erhöhter Stauchhärte führte (Versuchsnummer 6 und 7).

Die in Tabelle 5 und 6 dargestellten Ergebnisse (Versuchsnummern 10, 12, 15, 17, 20, 22 25 und 27 sind erfindungsgemäß) zeigen auf, dass auch Polyetherpolycarbonatbasierende Schäume, welche mit anderen Aminkatalysatoren als TEGOAMIN® 33 (Evonik Industries AG) und ohne Einsatz des erfindungsgemäßen Additivs dargestellt wurden, eine deutlich verlängerte Steigzeit und eine geringere Gasausbeute im Vergleich zu auf konventionellem Polyol

basierenden PUR-Weichschäumen aufwiesen (Versuchsnummer 9, 14, 19 und 24 im Falle von $CO_2$-haltigem Polyol und Versuchsnummern 11, 16, 21 und 26 im Falle von $CO_2$-haltigem Polyol, welches in Form eines Präpolymers vorlag; Referenzschäume Versuchsnummern 8, 13, 18, 23). Ebenso konnte eine Verschlechterung der Zugfestigkeit und der Bruchdehnung festgestellt werden. Durch den Einsatz von 1,5 Teilen des erfindungsgemäßen Additivs konnten auch im Falle von Verschäumungen, welche auf dem Einsatz von TEGOAMIN® B75 (Evonik Industries AG), TEGOAMIN® SMP (Evonik Industries AG), TEGOAMIN® DMEA (Evonik Industries AG) oder TEGOAMIN® ZE 3 (Evonik Industries AG) als Aminkatalysatoren basierten, sowohl die Steigzeit als auch die Gasausbeute verbessert werden (Versuchsnummern 10, 12, 15, 17, 20, 22, 25 und 27). Auch Zugfestigkeit und Bruchdehnung konnten durch den Einsatz des erfindungsgemäßen Additivs wieder deutlich gesteigert werden. Ebenfalls ist bei den Beispielen aus Tabelle 5 und 6 zu erkennen, dass Schäume, dargestellt durch Verwendung eines auf $CO_2$-basierenden Präpolymers, eine erhöhte Stauchhärte (Versuchsnummern 11 und 12, 16 und 17, 21 und 22, 26 und 27) aufzeigen.

Tabelle 5: Verschäumungsergebnisse bei Verwendung von TEGOAMIN® B75 (Evonik Industries AG) und TEGOAMIN® SMP (Evonik Industries AG) als Aminkatalysator

| **Versuchsnummer** | **8** | **9** | **10** | **11** | **12** | **13** | **14** | **15** | **16** | **17** |
|---|---|---|---|---|---|---|---|---|---|---|
| **Rezeptur** | **1** | **2a)** | **2b)** | **3a)** | **3b)** | **1** | **2a)** | **2b)** | **3a)** | **3b)** |
| **Präpolymer*4 14% $CO_2$** | | | | 100 | 100 | | | | 100 | 100 |
| **Polyolmischung*3 14% $CO_2$** | | 100 | 100 | | | | 100 | 100 | | |
| **Polyol 0% $CO_2$** | 100 | | | | | 100 | | | | |
| **Aminkatalysator** | **B 75** | **B 75** | **B 75** | **B 75** | **B 75** | **SMP** | **SMP** | **SMP** | **SMP** | **SMP** |
| | | | | | | | | | | |
| **Steigzeit** | 98 | 110 | 85 | 107 | 87 | 106 | 120 | 103 | 139 | 94 |
| **Höhe** | 30,6 | 29,5 | 32,7 | 29,4 | 30,4 | 30,2 | 29,0 | 31,4 | 28,8 | 30,5 |
| **Blow Off** | ja | ja | ja | ja | ja | ja | ja | ja | ja | ja |
| **Rückfall** | -0,2 | -0,6 | -0,8 | 0 | -0,2 | 0 | -0,6 | -0,8 | 0 | 0 |
| | | | | | | | | | | |
| **Dichte** | 23,3 | 21,6 | 21,7 | 22,8 | 21,7 | 22,4 | 21,0 | 21,6 | 22,8 | 22,4 |
| **Porosität** | 12 | 12 | 15 | 61 | 90 | 30 | 12 | 7 | 27 | 52 |
| **Stauchhärte CLD 40%** | 3,2 | 3,7 | 3,5 | 4,6 | 4,2 | 3,4 | 3 | 3,1 | 3,9 | 4,2 |
| **Zellzahl** | 15 | 15 | 18-19 | 15 | 15 | 15-16 | 16 | 16 | 15-16 | 14 |
| **Bruchdehnung (%)** | 281 | 181 | 244 | 137 | 164 | 311 | 207 | 248 | 172 | 235 |
| **Zugfestigkeit (kPa)** | 78 | 58 | 72 | 62 | 76 | 79 | 63 | 71 | 68 | 75 |

*3 = Polyolmischungen werden erhalten durch Abmischen von Polyol 211-10 der Firma Novomer (Polyethercarbonatpolyol, MW = 880, OH-Zahl = 127, $CO_2$-Gehalt = 43 Gew.-%) mit Voranol® CP 3322 der Firma Dow Chemical.
*4 = Präpolymer 14% $CO_2$, dargestellt aus Voranol® CP 3322, erhältlich bei der Firma Dow Chemical und Polyol 211-10 der Firma Novomer durch Umsatz mit zwei Teilen Toluylendiisocyanat T80 unter Einsatz von 0,06 Teilen Kosmos EF (Sn Katalysator der Firma Evonik Industries AG) als Katalysator (Reaktionsbedingungen: 100°C, 1 h).

Tabelle 6: Verschäumungsergebnisse bei Verwendung von TEGOAMIN® DMEA (Evonik Industries AG) und TEGOAMIN® ZE 3 (Evonik Industries AG) als Aminkatalysator

| **Versuchsnummer** | **18** | **19** | **20** | **21** | **22** | **23** | **24** | **25** | **26** | **27** |
|---|---|---|---|---|---|---|---|---|---|---|
| **Rezeptur** | **1** | **2a)** | **2b)** | **3a)** | **3b)** | **1** | **2a)** | **2b)** | **3a)** | **3b)** |
| **Präpolymer*4 14% $CO_2$** | | | | 100 | 100 | | | | 100 | 100 |
| **Polyolmischung*3 14% $CO_2$** | | 100 | 100 | | | | 100 | 100 | | |
| **Polyol 0% $CO_2$** | 100 | | | | | 100 | | | | |
| **Aminkatalysator** | **DMEA** | **DMEA** | **DMEA** | **DMEA** | **DMEA** | **ZE 3** | **ZE 3** | **ZE 3** | **ZE 3** | **ZE 3** |
| | | | | | | | | | | |
| **Steigzeit** | 113 | 124 | 99 | 156 | 108 | 93 | 103 | 93 | 105 | 82 |
| **Höhe** | 29,7 | 28,1 | 31,0 | 27,4 | 29,4 | 31,2 | 29,0 | 31,2 | 29,0 | 29,9 |
| **Blow Off** | ja | ja | ja | ja | ja | ja | ja | ja | ja | ja |
| **Rückfall** | 0 | -0,7 | -0,6 | 0 | (+)0,1 | -0,4 | -0,8 | -0,8 | 0 | -0,2 |
| | | | | | | | | | | |
| **Dichte** | 23,2 | 21,4 | 21,8 | 22,9 | 22,5 | 23,1 | 21,3 | 21,3 | 22,2 | 22,5 |
| **Porosität** | 13 | 14 | 12 | 37 | 60 | 10 | 10 | 10 | 42 | 51 |
| **Stauchhärte CLD 40%** | 3,2 | 3 | 2,9 | 4,2 | 3,7 | 2,9 | 2,8 | 2,8 | 3,9 | 3,7 |
| **Zellzahl** | 15 | 14 | 16 | 13-14 | 14 | 16 | 14 | 14-15 | 14 | 16-17 |
| **Bruchdehnung (%)** | 301 | 161 | 222 | 172 | 234 | 323 | 167 | 254 | 182 | 230 |
| **Zugfestigkeit (kPa)** | 96 | 59 | 77 | 68 | 82 | 89 | 55 | 72 | 63 | 69 |

*3 = Polyolmischungen werden erhalten durch Abmischen von Polyol 211-10 der Firma Novomer (Polyethercarbonatpolyol, MW = 880, OH-Zahl = 127, $CO_2$-Gehalt = 43 Gew.-%) mit Voranol® CP 3322 der Firma Dow Chemical.

*4 = Präpolymer 14% $CO_2$, dargestellt aus Voranol® CP 3322, erhältlich bei der Firma Dow Chemical und Polyol 211-10 der Firma Novomer durch Umsatz mit zwei Teilen Toluylendiisocyanat T80 unter Einsatz von 0,06 Teilen Kosmos EF (Sn Katalysator der Firma Evonik Industries AG) als Katalysator (Reaktionsbedingungen: 100°C, 1 h).

## Patentansprüche

1. Verfahren zur Herstellung von Polyurethansystemen, insbesondere -schäumen, durch Umsetzung einer oder mehrerer Polyolkomponenten mit einer oder mehrerer Isocyanatkomponenten, wobei

   i) das eingesetzte Polyol insgesamt mindestens 1 Gew.-%, vorzugsweise mindestens 5 Gew.-% Kohlenstoffdioxid, gebunden als Carbonat enthält und
   ii) mindestens 10 Gew.-% des eingesetzten Polyols als Polyetherpolycarbonatpolyol vorliegt, Gew.-% jeweils bezogen auf die gesamte eingesetzte Menge Polyol,

   in Gegenwart eines Additivs, wobei als Additiv zumindest eine, vorzugsweise zwei, vorteilhafterweise drei und insbesondere alle, der nachfolgenden Verbindungen a) bis d) zur Anwendung gelangen:

   a) ionisches Tensid A, ausgewählt aus solchen der Formeln (II)

   $$A^-M^+ \qquad (II)$$

   mit $A^-$ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und $M^+$ = Kation, welches kein Ammoniumkation ist, vorzugsweise Metallkation, bevorzugt Alkalimetallkation und besonders bevorzugt Kalium- oder Natriumkation,
   b) ionisches Tensid B, ausgewählt aus einer quaternisierten Ammoniumverbindung,
   c) eine tertiäre Aminverbindung C, die kein Oxazasilinan ist und eine Molmasse von vorzugsweise mindestens 150 g/mol, besonders bevorzugt mindestens 200 g/mol aufweist,
   d) Oxazasilinan D.

2. Verfahren gemäß Anspruch 1, **dadurch gekennzeichnet, dass** das eingesetzte Additiv 0 bis 90 Gew.-%, vorzugsweise 10 bis 80 Gew.-%, besonders bevorzugt 20 bis 70 Gew.-%, bezogen auf die gesamte Additivzusammensetzung, eines oder mehrerer anorganischer oder organischer Lösungsmittel, vorzugsweise ausgewählt aus Wasser, Alkoholen, insbesondere Polyethermonoolen oder -polyolen, vorzugsweise bestehend aus H-funktionellen Startersubstanzen, an welche mittels Alkoxylierung Alkylenoxide (Epoxide) mit 2-24 Kohlenstoffatomen, vorzugsweise Ethylenoxid und/oder Propylenoxid, angelagert wurden und die ein Molekulargewicht von vorzugsweise 200 - 8000 g/mol, bevorzugt von 300 - 5000 g/mol, besonders bevorzugt von 500 - 1000 g/mol, und einen PO-Gehalt von vorzugsweise 10 - 100 Gew.%, bevorzugt von 50 - 100 Gew.% aufweisen sowie Polyestermonolen oder -polyolen mit einem Molekulargewicht vorzugsweise im Bereich von 200 bis 4500 g/mol, Glykolen, Alkoxylaten, Carbonaten, Ether, Ester, verzweigten oder linearen aliphatischen oder aromatischen Kohlenwasserstoffen und/oder Ölen synthetischer und/oder natürlicher Herkunft, enthält.

3. Verfahren zur Herstellung von Polyurethansystemen nach Anspruch 1 oder 2,
   **dadurch gekennzeichnet, dass** als Additiv eine Additivzusammensetzung enthaltend

   a) mindestens ein ionisches Tensid A, ausgewählt aus solchen der Formeln (II)

   $$A^-M^+ \qquad (II)$$

   mit $A^-$ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und $M^+$ = Kation, welches kein Ammoniumkation ist, vorzugsweise Metallkation, bevorzugt Alkalimetallkation und besonders bevorzugt Kalium- oder Natriumkation,
   und/oder
   b) mindestens ein ionisches Tensid B, ausgewählt aus einer quaternisierten Ammoniumverbindung,
   sowie weiterhin
   c) mindestens eine tertiäre Aminverbindung C, die kein Oxazasilinan ist und eine Molmasse von vorzugsweise mindestens 150 g/mol, besonders bevorzugt mindestens 200 g/mol aufweist,
   und/oder, vorzugsweise und
   d) mindestens ein Oxazasilinan D,

eingesetzt wird.

4. Verfahren nach einem der Ansprüche 1 bis 3, **dadurch gekennzeichnet, dass** mindestens 20 Gew.-%, in weiter vorteilhafter Weise mindestens 30 Gew.-%, vorzugsweise mindestens 50 Gew.-%, insbesondere mindestens 75 Gew.-% des eingesetzten Polyols als Polyetherpolycarbonatpolyol vorliegt, Gew.-% jeweils bezogen auf die gesamte eingesetzte Menge Polyol.

5. Verfahren nach einem der Ansprüche 1 bis 4, **dadurch gekennzeichnet, dass** das Polyol insgesamt einen Gehalt an Carbonatgruppen (berechnet als $CO_2$) von mindestens 1 Gew.-%, vorzugsweise von mindestens 5 Gew.-%, besonders bevorzugt von mindestens 10 Gew.-% und ganz besonders bevorzugt von 15 bis 50 Gew.-% aufweist, bezogen auf die gesamte eingesetzte Menge Polyol.

6. Verfahren nach einem der Ansprüche 1 bis 5, **dadurch gekennzeichnet, dass** das Polyetherpolycarbonatpolyol vorzugsweise ein zahlenmittleres Molekulargewicht von 500 bis 20000, vorzugsweise 500 bis 5000, besonders bevorzugt 750 bis 4000 und ganz besonders bevorzugt 1000 bis 3500, gemessen mittels GPC (Gel-Permeations-Chromatographie), aufweist.

7. Verfahren nach einem der Ansprüche 1 bis 6, **dadurch gekennzeichnet, dass** die Additivzusammensetzung mindestens ein Oxazasilinan D aufweist, wobei es sich insbesondere um 2,2,4-Trimethyl-1,4,2-oxazasilinan gemäß Formel (V) handelt

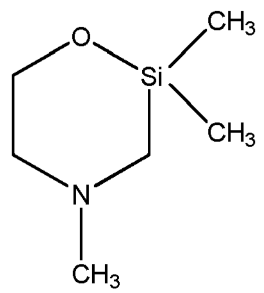

(V).

8. Verfahren nach einem der Ansprüche 1 bis 7, **dadurch gekennzeichnet, dass** in der Additivzusammensetzung als ionisches Tensid B zumindest eine Imidazolium-Verbindung der Formel (IIIh) enthalten ist,

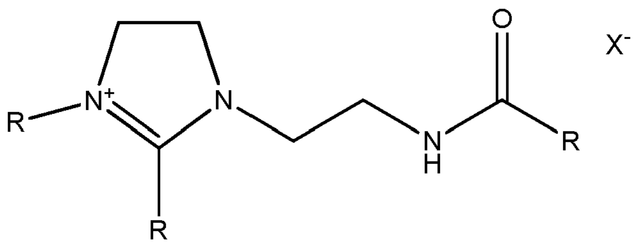

(IIIh)

mit R gleiche oder unterschiedliche, gesättigte oder ungesättigte, gegebenenfalls alkoxylierte Kohlenwasserstoffreste mit 1 bis 30 Kohlenstoffatomen,
X- = Anion aus der Gruppe der Halogenide, Nitrate, Sulfate, Hydrogensulfate, Alkyl- und Arylsulfate, Polyethersulfate und -sulfonate, Sulfonate, Alkyl- und Arylsulfonate, Alkyl- und Arylcarboxylate, Saccharinate, Polyetherphosphate und Phosphate, vorzugsweise Chlorid-, Phosphat- oder Methylsulfat-Anion, insbesondere Methylsulfat-Anion.

9. Verfahren nach einem der Ansprüche 1 bis 8, **dadurch gekennzeichnet, dass** sowohl ein ionisches Tensid B als auch ein Oxazasilinan D in der Additivzusammensetzung enthalten sind.

10. Verfahren nach einem der Ansprüche 1 bis 9, **dadurch gekennzeichnet, dass** das Massenverhältnis der Summe aller Amine C zur Summe aller Oxazasilinane D von 500:1 bis 1:1, bevorzugt von 200:1 bis 5:1 und besonders bevorzugt von 50:1 bis 10:1 beträgt.

**11.** Verfahren nach einem der Ansprüche 1 bis 10, **dadurch gekennzeichnet, dass** die Menge an Additivzusammensetzung so gewählt wird, dass 0,001 bis 10 Gew.-Teile, insbesondere 0,2 bis 5 Gew.-Teile der Additivzusammensetzung pro 100 Gew.-Teilen des insgesamt eingesetzten Polyol eingesetzt werden.

**12.** Verfahren nach einem der Ansprüche 1 bis 11, **dadurch gekennzeichnet, dass** die Additivzusammensetzung zumindest 3 Komponenten umfasst, nämlich

(i) als tertiäre Aminverbindung C, die eine Molmasse von vorzugsweise mindestens 150 g/mol, besonders bevorzugt von mindestens 200 g/mol aufweist, zumindest eine Verbindung der Formel (IV)

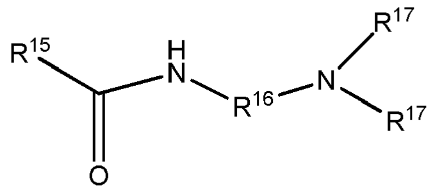

(IV)

mit
$R^{15}$= gesättigte oder ungesättigte Kohlenwasserstoffreste mit 5 bis 30, vorzugsweise 8 bis 20 Kohlenstoffatomen,
$R^{16}$ = zweiwertiger Alkylrest mit 2 oder 3 Kohlenstoffatomen,
$R^{17}$ = gleiche oder verschiedene, vorzugsweise gleiche Alkylreste mit 1 bis 3 Kohlenstoffatomen, bevorzugt Methylreste,
und zwar insbesondere Dimethylaminopropyl-Cocossäureamid,
(ii) mindestens ein ionisches Tensid B, ausgewählt aus einer quaternisierten Ammoniumverbindung, vorzugsweise eine Imidazolium-Verbindung, insbesondere eine Imidazolium-Verbindung der Formel (IIIh),

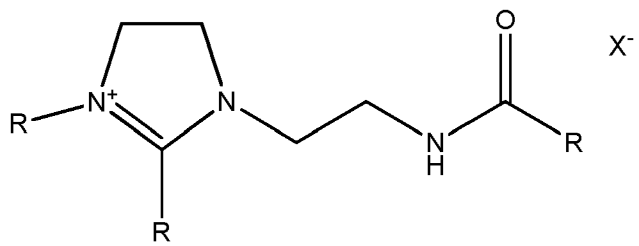

(IIIh)

mit R gleiche oder unterschiedliche, gesättigte oder ungesättigte, gegebenenfalls alkoxylierte Kohlenwasserstoffreste mit 1 bis 30 Kohlenstoffatomen,
X- = Anion aus der Gruppe der Halogenide, Nitrate, Sulfate, Hydrogensulfate, Alkyl- und Arylsulfate, Polyethersulfate und -sulfonate, Sulfonate, Alkyl- und Arylsulfonate, Alkyl- und Arylcarboxylate, Saccharinate, Polyetherphosphate und Phosphate, vorzugsweise Chlorid-, Phosphat- oder Methylsulfat-Anion, insbesondere Methylsulfat-Anion.
(iii) mindestens ein Oxazasilinan D, und zwar insbesondere 2,2,4-Trimethyl-1,4,2-oxazasilinan Formel (V)

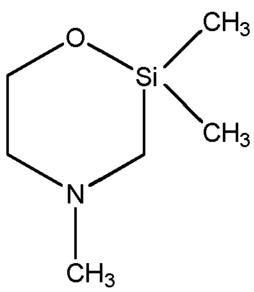

(V),

wobei als Polyolkomponente eine Polyolmischung eingesetzt wird, welche mindestens 10 Gew.-%, vorteilhafterweise mindestens 20 Gew.-%, in weiter vorteilhafter Weise mindestens 30 Gew.-%, vorzugsweise mindestens 50 Gew.-%, insbesondere mindestens 75 Gew.-% Polyetherpolycarbonatpolyol bezogen auf die gesamte eingesetzte Menge Polyol enthält.

**13.** Polyurethansystem, insbesondere -schaum, erhältlich durch ein Verfahren gemäß einem der Ansprüche 1 bis 12.

**14.** Zusammensetzung, geeignet zur Herstellung von Polyurethansystemen, insbesondere Polyurethanschäumen, **dadurch gekennzeichnet, dass** sie eine Mischung aus Polyol und einer Additivzusammensetzung, wie sie in einem der Ansprüche 1 bis 12 definiert ist, umfasst,
wobei

i) das eingesetzte Polyol insgesamt mindestens 1 Gew.-%, vorzugsweise mindestens 5 Gew.-% Kohlenstoffdioxid, gebunden als Carbonat enthält und
ii) mindestens 10 Gew.-% des eingesetzten Polyols als Polyetherpolycarbonatpolyol vorliegt, Gew.-% jeweils bezogen auf die gesamte eingesetzte Menge Polyol enthält.

**15.** Verwendung einer Additivzusammensetzung enthaltend

a) mindestens ein ionisches Tensid A, ausgewählt aus solchen der Formeln (II)

$$A^-M^+ \qquad (II)$$

mit $A^-$ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und $M^+$ = Kation, welches kein Ammoniumkation ist, vorzugsweise Metallkation, bevorzugt Alkalimetallkation und besonders bevorzugt Kalium- oder Natriumkation,
und/oder
b) mindestens ein ionisches Tensid B, ausgewählt aus einer quaternisierten Ammoniumverbindung,
sowie weiterhin
c) mindestens eine tertiäre Aminverbindung C, die kein Oxazasilinan ist und eine Molmasse von vorzugsweise mindestens 150 g/mol, besonders bevorzugt mindestens 200 g/mol aufweist,
und/oder, vorzugsweise und
d) mindestens ein Oxazasilinan D,

zur Herstellung von Polyurethansystemen, insbesondere Polyurethanschäumen, durch Umsetzung einer oder mehrerer Polyolkomponenten mit einer oder mehrerer Isocyanatkomponenten,
wobei

i) das eingesetzte Polyol insgesamt mindestens 1 Gew.-%, vorzugsweise mindestens 5 Gew.-% Kohlenstoffdioxid, gebunden als Carbonat enthält und
ii) mindestens 10 Gew.-% des eingesetzten Polyols als Polyetherpolycarbonatpolyol vorliegt, Gew.-% jeweils bezogen auf die gesamte eingesetzte Menge Polyol.

Europäisches Patentamt
European Patent Office
Office européen des brevets

# EUROPÄISCHER RECHERCHENBERICHT

Nummer der Anmeldung
EP 15 15 8626

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2013 204991 A1 (EVONIK INDUSTRIES AG [DE]) 25. September 2014 (2014-09-25)<br>* Absätze [0001], [0019], [0021], [0040], [0049], [0053], [0056], [0087]; Ansprüche; Beispiele * | 1-15 | INV.<br>C08G18/48<br>C08G18/76<br>C08G18/18<br>C08G18/44<br>C08G18/10<br>C08G18/16<br>C08K5/19<br>C08K5/20<br>C08K5/42<br>C08K5/549<br>C08K5/3445<br><br>ADD.<br>C08G101/00 |
| Y | EP 2 551 287 A2 (EVONIK GOLDSCHMIDT GMBH [DE]) 30. Januar 2013 (2013-01-30)<br>* Absätze [0001], [0016], [0017], [0025], [0029], [0035]; Ansprüche; Beispiele * | 1-15 | |
| X | EP 2 730 602 A1 (BAYER MATERIALSCIENCE AG [DE]) 14. Mai 2014 (2014-05-14)<br>* Absätze [0001], [0094], [0095], [0101]; Ansprüche; Beispiele 7, 9, 11 * | 1-15 | |
| X | WO 2012/130760 A1 (BAYER MATERIALSCIENCE AG [DE]; JACOBS GUNDOLF [DE]; MEYER-AHRENS SVEN) 4. Oktober 2012 (2012-10-04)<br>* Seite 1, Zeilen 3-5 *<br>* Seite 2, Zeile 21 - Seite 3, Zeile 2 *<br>* Seite 5, Zeilen 6-17; Ansprüche; Beispiel 3 * | 1-15 | RECHERCHIERTE SACHGEBIETE (IPC)<br>C08G<br>C08K |

Der vorliegende Recherchenbericht wurde für alle Patentansprüche erstellt

1

| Recherchenort | Abschlußdatum der Recherche | Prüfer |
|---|---|---|
| München | 16. September 2015 | Eigner, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 15 15 8626

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-09-2015

| Im Recherchenbericht angeführtes Patentdokument | Datum der Veröffentlichung | Mitglied(er) der Patentfamilie | Datum der Veröffentlichung |
|---|---|---|---|
| DE 102013204991 A1 | 25-09-2014 | DE 102013204991 A1 | 25-09-2014 |
| | | WO 2014146888 A1 | 25-09-2014 |
| EP 2551287 A2 | 30-01-2013 | BR 102012018379 A2 | 30-07-2013 |
| | | CA 2783348 A1 | 26-01-2013 |
| | | CN 102898678 A | 30-01-2013 |
| | | DE 102011079791 A1 | 31-01-2013 |
| | | EP 2551287 A2 | 30-01-2013 |
| | | US 2013190414 A1 | 25-07-2013 |
| EP 2730602 A1 | 14-05-2014 | KEINE | |
| WO 2012130760 A1 | 04-10-2012 | CA 2831387 A1 | 04-10-2012 |
| | | CN 103764703 A | 30-04-2014 |
| | | EP 2691434 A1 | 05-02-2014 |
| | | RU 2013147684 A | 10-05-2015 |
| | | US 2014066535 A1 | 06-03-2014 |
| | | WO 2012130760 A1 | 04-10-2012 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2013016331 A
- WO 2008058913 A
- US 3900424 A
- US 3953383 A
- WO 2010028362 A
- WO 2009130470 A
- WO 2013022932 A
- WO 2011163133 A
- US 4500704 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- WO 2008092767 A1
- WO 2012049162 A1
- WO 2010028362 A1
- WO 2010013948 A2
- EP 0152878 A1
- EP 0409035 A2
- DE 102005050473 A1
- DE 19629161 A1
- DE 3508292 A1
- DE 4444898 A1
- EP 1061095 A1
- EP 0532939 B1
- EP 0867464 B1
- EP 1683831 A1
- DE 102007046860 A1
- EP 2182020 A
- EP 1520870 A
- DE 19859759 C1
- EP 0493836 A1
- US 5565194 A
- EP 1350804 A
- EP 1095968 A
- EP 0380993 A
- US 3346557 A
- WO 0158976 A1
- WO 2005063841 A1
- WO 0222702 A1
- WO 2006055396 A1
- WO 03029320 A1
- US 6924321 B2
- US 6762274 B2
- EP 2104696 B1
- WO 2004060956 A1
- WO 2013102053 A1


### In der Beschreibung aufgeführte Nicht-Patentliteratur


- Kunststoff-Handbuch, Band 7, Polyurethane. Carl-Hanser-Verlag, 1966, vol. 7
- KUNSTSTOFF - HANDBUCH POLYURETHANE. 1983
- KUNSTSTOFF - HANDBUCH POLYURETHANE. 1993